(19)

**Europäisches Patentamt**
**European Patent Office**
**Office européen des brevets**

(11) **EP 1 108 334 B1**

(12) **EUROPEAN PATENT SPECIFICATION**

(45) Date of publication and mention
of the grant of the patent:
**07.11.2007 Bulletin 2007/45**

(51) Int Cl.:
***H04Q 3/00*** (2006.01)

(21) Application number: **99944973.9**

(22) Date of filing: **24.08.1999**

(86) International application number:
**PCT/SE1999/001444**

(87) International publication number:
**WO 2000/011885 (02.03.2000 Gazette 2000/09)**

(54) **IMPROVEMENTS IN, OR RELATING TO, TELESERVICE MANAGEMENT SYSTEMS**

VERBESSERUNGEN IN, ODER IN BEZUG ZU TELEDIENSTVERWALTUNGSSYSTEMEN

AMELIORATIONS APPORTEES A DES SYSTEMES DE GESTION DE TELESERVICES

(84) Designated Contracting States:
**AT BE CH CY DE DK ES FI FR GB GR IE IT LI LU MC NL PT SE**
Designated Extension States:
**LT LV**

(30) Priority: **25.08.1998 SE 9802841**
**13.07.1999 SE 9902679**

(43) Date of publication of application:
**20.06.2001 Bulletin 2001/25**

(73) Proprietor: **TELIA AB**
**123 86 Farsta (SE)**

(72) Inventors:
• **BJÖRKMAN, Nils**
**S-118 64 Stockholm (SE)**
• **CSÉLENYI, Istvan**
**S-136 63 Haninge (SE)**
• **ELLDIN, Jonas**
**S-118 54 Stockholm (SE)**
• **GISGÅRD, Christer**
**S-122 48 Enskede (SE)**
• **LATOUR-HENNER, Alexander**
**S-132 33 Saltsjö-Boo (SE)**

• **LUNDBERG, Torbjörn**
**S-131 31 Nacka (SE)**
• **ÖSUND, Stefan**
**S-138 35 Älta (SE)**

(74) Representative: **Hopfgarten, Nils**
**L.A. Groth & Co. KB**
**P.O. Box 6107**
**102 32 Stockholm (SE)**

(56) References cited:
**EP-A2- 0 774 878**

• **BJORKMAN ET AL.: 'The EMMA Multimedia Conference Service' INTERNATIONAL CONFERENCE ON INFORMATION COMMUNICATIONS AND SIGNAL PROCESSING ICICS'97, 09 September 1997 - 12 September 1997, pages 1691 - 1695, XP002941275**
• **SVRIVASTA et al., "Object Oriented simulation of multimedia on demand services over ATM network", In: IEEE Modeling, Analysis and Simulation of Computer and Telecommunication Systems, 1996, MASCOTS'96., Proceedings of the Fourth International Workshop on 1-3 Feb. 1996, pages 128-132, XP002941274**

EP 1 108 334 B1

**Description**

The present invention relates to a teleservice management system and a method of managing teleservices.

The first world wide telecommunication system, i.e. the digital telephone network, has been working for years. The allocation of resources with guaranteed service quality requirements, such as low delay and delay variation, for this single-service system was also solved a long time ago. Resource management is much more complicated in the case of broadband integrated services networks which support several multimedia, multi-connection, multi-party services with different requirements.

Diversity is further increased by the fact that both the telecommunication companies and the computer industry are very active in the sector of multimedia teleservices. The different approaches result in a mixture of technical expressions, usually with partially overlapping meaning. It is, therefore, important to start by defining the concepts which are most frequently used in this patent specification. These definitions are close to existing standards and proposals, for example:

- RACE Project R2044, MAGIC-Multiservice Applications Governing Integrated Control, Service Description Framework and B-ISDN Service Descriptions, 3rd Deliverable, 1992;

- TINA-C, Network Resource Information Model Specification, Version 3.0, N. Natarajan (ed.) December 1997; and

- ITU-T Recommendation M.3010, Principles for a Telecommunications Management Network, 1992.

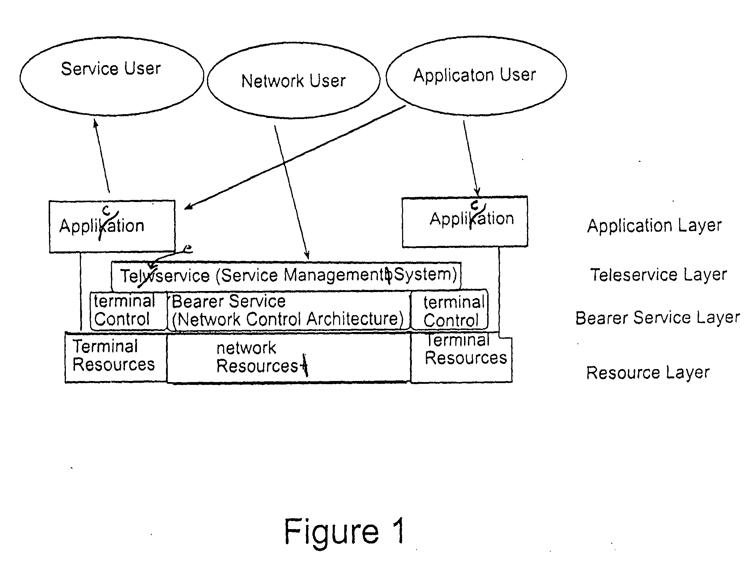

Figure 1, of the accompanying drawings, gives an overview of the different logical service layers of a telecommunications system used for delivering teleservices, together with the providers and consumers of the services and the functional units used for providing services in the different layers.

The Application is the final utility which presents the information, delivered by the teleservice, to the users, and collects the information to be delivered, by the teleservice, from the users. The Application Layer uses the services of the Teleservice Layer and provides the utility to the users. However, an application can have indirect access to a certain subset of the terminal resources in order to change some of their attributes which are of local importance and, therefore, are not involved in the teleservice, e.g. audio volume, image-contrast. The application is located in the terminals.

The term Teleservice, or Telecommunication Service, is used for the information transfer service that provides the complete capability for communication between users and user applications. The Teleservice Layer provides services to the Application Layer in a transparent way and uses the services of the Bearer Service Layer. It includes every function in the terminal equipment and in the network which are related to the delivery of information between terminals, e.g. terminal network interface, encryption, a combination of separate media, gateway and protocol conversion.

The Bearer Service Layer lies directly on top of the Resource Layer thus it can reserve, or release, connections, i,e. manage terminal and network resources, as a service provided to the Teleservice Layer. There is a distributed Control Architecture in the network and the terminal(s) which supports this function.

A Session is an instance of a Teleservice associated with one, or more, parties (or Service Users), or with a party and a network entity. The term Call, arising from telephony, is often used instead of Session. In this patent specification, a Call is regarded as the group of bearer connections managed by the Control Architecture.

A Service User, SU, or Party, is an addressable signalling end point associated with a Session. It may be an End-User, or an Application Provider (AP). The former consumes the application and thus also the Teleservice, while the latter provides the Application on top of the Teleservice Layer. In the case of content-based services, the Application Provider may also provide the content.

The Network Provider, NP, provides the teleservice together with its special functions. Moreover, it may provide the Bearer Services through the Control Architecture.

The Service Management System, SMS, is the functional entity in the Teleservice Layer which controls the teleservice, both in the terminals and in the network. It uses the resource binding services of the Control Architecture.

By using this environment the session and bearer control functions, also referred to as Call and Connection Control, see:

- S. Minzer, H. Bussey, R. Porter, G. Ratta, Evolutionary Trends in Call Control, 15th International Switching Symposium, ISS'95, Vol.2. pp. 300-304; and

- S. Blaabjerg, G. Fodor, S. Székely, Call Queueing: The design and performance analysis of a new ATM signalling functionality, Broadband and Multimedia Workshop, Zagreb, Croatia, November, 1996, pp. 99-113,

are separated in an efficient way, forming two cooperating levels of resource management. This idea is supported by many published results and it is believed that this separation eases the implementation of functions such as mobility, multicasting and resource scaling, see:

- M.I. Smirnov, Object-Oriented Framework for Scalable Multicast Call Modelling, 2nd International COST 237 Workshop, Copenhagen, Denmark, November 1995, pp. 19-39;

- A.A. Lazar et al., Control of resources in broadband networks with quality of service guarantees, IEEE Communications Magazine, October 1991;

- M. Jones, Adaptive Real Time Resource Management Supporting Modular Composition of Digital Multimedia Services, 4th International Workshop on Network and Operating Systems Support for Digital Audio and Video, University of Lancester, November 1993;

- A. Campbell, G. Coulson, D. Hutchison, A quality of service architecture, Computer Communications Review, Vol. 24. No. 1. 1994, pp. 6-27;

- M. Herzberg, A. Pitsillides, A Hierarchical Approach for the Bandwidth Allocation, Management, and Control in-BISDN; in Proc. of ICC'93, 1993;

- H. Crossmann, C. Griwodz, G. Grassel, M. Pühlhöfer, M. Schreiber, R. Steinmetz, H. Wittig, L. Wolf, GLASS: A Distributed MHEG-Based Multimedia System, 2nd International COST 237 Workshop, Copenhagen, Denmark, November 1995, pp. 40-60; and

- G.G. Xie, S.S. Lam, An efficient network architecture motivated by appliation-level QoS, Journal of High Speed Networks, Vol. 6. No. 3. 1997 pp. 165-179.

A higher management layer is proposed for guaranteed-performance communication services in:

- C. Parris, D. Ferrari, The implementation of adynamic management scheme for guaranteed-performance connections, Computer Communications Vol. 21 No. 1. 1998, pp. 1-23; and

- D. Reininger, M. Ott, G. Michelitsch, and G. Welling, Dynamic Bandwidth Allocation for Distributed Multimedia with Adaptive QoS. IEEE Real-Time Systems Symposium Workshop on Resource Allocation Problems in Multimedia Systems, Washington, DC, December, 1996.

Moreover, a balance between the application and the network control architecture can be found with the SMS. Without it there is no relation between the network and the application. Although there are smart protocols, e.g. TCP, in the bearer service layer which try to follow the current network situation, this is a very crude solution from the application's and user's point of view. If there is low network load, the best-effort control protocol probably takes more resources than the user, or the application needs.

There are several tasks that have to be performed by the SMS starting with the retrieval of resource requirements and proceeding to the reservation of resources. These issues will now be described, based on a comparison between the telephony service and distributed multimedia teleservices.

By picking up the phone-receiver and dialing the number of the destination terminal, the calling party implicitly determines the resources required by the telephony service; i.e. the source and destination phone devices as terminal resources and a voice connection with guaranteed service quality parameters as network resource, see:

- ITU-T Recommendation Q.724, Specifications of Signaling System No. 7 - Telephone user part, 1988.

It is much harder to retrieve the necessary information in the case of complex broadband teleservices. Firstly, there is a very large number of teleservice parameters. Secondly, it can hardly be assumed that an average user is able to setup every characteristic of the teleservice, from the network to the application layer, which is necessary to determine resource requirements. Naive users prefer to express their wishes in abstract terms. Thirdly, it is probable that neither the End-User, nor the Application Provider are willing to deal with all of these parameters every time a teleservice is invoked.

There is an unambiguous mapping between phone call request and the corresponding resources. The given phone number even determines the route of the connection, see:

- ITU-T Recommendation Q.107, Analysis of Forward Address Information For Routing.

Accordingly, mapping is performed based on a simple, implicit model, in the case of a telephony service.

The provision of a teleservice requires that a much more complex model is used by the SMS for mapping between the abstract terms given by naive users and the Control Architecture, see:

- A.A. Lazar et al., Control of resources in broadband networks with quality of service guarantees, IEEE Communications Magazine, October 1991;

- Y.I. Manolessos, M.E. Theologou, Dynamic application scaling as a means for QoS management, Computer Communications Vol. 20 1997, pp. 393-405;

- B. Strelec, Call Processing Negotiations of Networked Multi-party and Multimedia Sessions, Broadband and Multimedia Workshop, Zagreb, Croatia, November, 1996, pp. 225-235.

The SMS should fulfill the request of the user and optimize the usage of network and terminal resources in the mapping procedure. The best network alternative should be found according to the load situation. Apart from considering the load in the terminal, the incompatibility between terminal resources should also be avoided.

In the case of normal telephony, the source terminal is allocated first, after lifting the phone-receiver, then the network resources are allocated as the CCSS #7 signalling message proceeds through the network and the destination terminal is finally allocated. If the called user answers within a given waiting time, the call is established. Otherwise the allocated resources are released in a reverse order, see:

- ITU-T Recommendation-Q.724, Specifications of Signalling System No. 7 - Telephone user part, 1988.

This Bearer Service Layer protocol does not require management functions in the Teleservice Layer.

Because of the complexity and diversity of broadband teleservices, the management functions have to be divided between the Service Management System and the Control Architecture. Since signalling messages in the Teleservice Layer are not yet supported by the current standards, a new protocol has to be designed, see:

- S. Blaabjerg, G. Fodor, S. Székely, Call Queueing: The design and performance analysis of a new ATM signalling functionality, Broadband and Multimedia Workshop, Zagreb, Croatia, November, 1996, pp. 99-113.

This can be considered as a third party, overlay signalling, since it is up to the SMS to translate the Teleservice Layer messages to proper bearer signalling messages during call establishment, operation and release. Basically, two type of Bearer Service Layer protocols can be distinguished, the forward and backward allocation, depending on the direction of resource reservation between the source and destination terminals. If an SMS is used it can support the Control Architecture in resource reservation by giving rules for connection setup and for downgrading a request.

The telephony network fully understands the QoS language spoken by the telephony application and there is an inherent protection of allocated resources.

This analogy between multimedia applications and broadband networks is not obvious. Firstly, guaranteed quality is not supported either in the applications, or in the network, in case of best effort services. There is, however, a segment of users who would be ready to pay for quality. Secondly, even if the network Control Architecture can provide guaranteed service quality, e.g. IPv6, or ATM, the vast majority of recent applications cannot use it-because of the lack of mapping and signalling capabilities between the application and the bearer Control Architecture. There are only a few native ATM applications which can utilize the QoS capabilities of ATM. The prevention of congestion, both on call level (Call Admission Control - CAC) and cell level (shaping, or Usage Parameter Control - UPC) is essential for providing guaranteed service quality in ATM networks. According to the standards:

- ITU-T Recommendation 1.371, Traffic control and congestion control in B-ISDN; and

- ATM Forum, ATM User Network Interface Specification 3.1, September 1994,

the ATM terminal has to describe its traffic by giving the so called traffic parameter set to the access node.

In Björkman et al.: The EMMA Multimedia Conference Service', International Conference on Information Communications and Signal Processing, ICICS '97, 9-12 September 1997, pages 1691-1695, XP002941275 a multimedia conferencing service is described, in which an object-oriented model describes the parties involved in a session, the allocated network, terminal resources and the media used for communication, The objects are created and updated by a high level service management protocol. A centralized resource management scheme ensures QoS for any kind of multimedia service.

EP 0 774 878 discloses an electronic bridge resource management system having a programmatically implemented processing system. A bridge service interfaces with a plurality of clients and receives a QoS specification from each client. A resource manager receives a QoS specification from the bridge service, distributes at least one QoS constraint associated with the QoS specification across the flow processing modules of a channel, determines resource requirements for each of the flow processing modules, and then determines whether bridge resources can be allocated to meet the QoS specification.

Svrivastava et al.: 'Object Oriented Simulation of Multimedia on Demand over ATM Network', IEEE Modeling, Analysis and Simulation of Computer and Telecommunication Systems, 1996, MASCOTS '96, Proceedings of the Fourth International Workshop, 1-3 February 1996, pages 128-132, XP002941274 describes a multimedia-on-demand system for various multimedia-on-demand services like movie-on-demand, interactive network games, remote browsing, multimedia library access and remote education.

In spite of the telephony service, multimedia services over broadband networks usually require application scaling which is an efficient way of adjusting the service quality to changing conditions in the network, see:

- C. Parris, D. Ferrari, The implementation of a dynamic management scheme for guaranteed-performance connections, Computer Communications Vol. 21 No. 1. 1998, pp. 1-23;

- D. Reininger, M. Ott, G. Michelitsch, and G. Welling, Dynamic Bandwidth Allocation for Distributed Multimedia with Adaptive QoS, IEEE Real-Time Systems Symposium Workshop on Resource Allocation Problems in Multimedia Systems, Washington, DC, December, 1996;

- Y.I. Manolessos, M.E. Theologou, Dynamic application scaling as a means for QoS management, Computer Communications Vol. 20 1997, pp. 393-405.

Application scaling may be performed in an uncoordinated way, i.e. with no regard to scaling of terminal and network resources. A better approach is when all scaling actions are coordinated by an SMS. Thus, application scaling should be supported by a teleservice which is scaleable in terms of terminal and network resources. Application and network scaling, with provision of assured quality, is the focus of many recent studies.

A steadily changing network load and terminal behaviour have been assumed in some cases, providing continuous application seating during the life-cycle of a session. Since the quality perceived by the Service User changes, as a consequence of application scaling, the user is faced with a steadily varying service quality. Although upper and lower quality bounds are given by the user in the session request, he loses every control after the session is established and the Dynamic Scaling Service starts to tune the application according to the monitored traffic characteristics in the Bearer Service Layer. Therefore the user is excluded from the negotiation process, the system can guarantee only that the QoS is within a certain range and the user has to accept the actual quality determined by unknown conditions. This network oriented scaling approach results in a very small enhancement compared to applications based on best-effort networks, where the service quality changes without limitations, according to the dynamically scaling best-effort service.

In spite of the previous work, the present invention proposes a user oriented approach for scaling. The initiator, or payer user, should settle an agreement with the SMS about all terms of the requested service, including the User Quality Levels, price and downgrading permissions, before the session is started. After this negotiation phase, in which the other parties of the session should be involved as well, the users should receive exactly the quality they are paying for. Thus, the SMS must guarantee the resources which are necessary for providing the agreed quality and the scaling of network and terminal resources should take place either before session establishment, or it should be transparent for the application and users. Scaling which effects the User Quality Level (UQL), may happen only if a user initiated it, or if it can not be avoided, e.g. because of a fatal network error. In the latter case, the users should be informed about the possible result and be able to start a new negotiation.

The main advantage of the User Oriented Scaling approach is that there are no annoying changes in the service-quality during the service session. This is even better than graceful media scaling which is mentioned as the QoS adaptation with minimal, or no, disruption to service users. Moreover, there is no need for additional signalling messages and control efforts induced by changes in the network conditions when a session is already established. Since it is assumed that the SMS has a detailed model of the teleservice, the cooperating Control Architecture sets up not only pure connections, but can take into account that the particular resource means something for the teleservice. For instance, it can downgrade the service in terms of quality perceived by the users and not only in terms of pure bandwidth. This is an intelligent way of scaling and downgrading.

The user oriented approach can be easily followed in the case of fixed networks, where the network conditions are not so changeable. However, the network oriented approach can be beneficial for steadily changing network conditions, such as in mobile networks.

The Teleservice Management System (TSMS) of the present invention provides overall service management functions thereby solving a number of problems related to Teleservices, in general, and to complex Teleservices, in particular, i.e. a service involving multi-party, multi-connection and/or multimedia.

In particular, the present invention solves the following problems:

- the TSMS relieve the user from having to provide elaborate and comprehensive technical descriptions in order to invoke the service and to indicate service quality aspects;

- the SU cannot usually express his QoS preference, since the application does not ask him, therefore, the TSMS has an own Service Control interface for interaction with the user

- allocation, and release of telecommunication applications and resources in terminals and network;

- co-ordination and integration of telecommunication applications and resources in terminals and network; and

- controlling of resources from the service point of view, thereby maintaining the required quality of service, e.g. adapting resources, such as, communication bearer capabilities, according to different, or shifting, circumstances.

The TSMS principles provide a general scheme for constructing new teleservices which facilitates the service definition, in general and, in particular, provides a systematic way of handling the different service options, which might otherwise degenerate into an unmanageably large set of possible service variants.

The TSMS, of the present invention, make it possible to create new complex services by including existing (legacy) applications and communication facilities as components integrated within the new service. This facilitates the use of existing standard applications and standard communication functions as building blocks in more complex teleservices.

The present invention promotes the evolution of new and potential business segments for service providers by forming the Teleservice Layer and enabling service providers to supply Teleservices to end users instead of reselling the applications, or the network connectivity.

Fast service creation is promoted by the re-use of components in TSMS. Current evolution in IT can be described as, on the one hand, ongoing development of applications, primarily to be used in a PC, and, on the other hand, rapid development of better communication capabilities. These two trends are mainly driven by two different types of player, software manufacturers on the one side, and the telecom industry on the other. A new teleservice, that is not entirely trivial, will typically make use of both of these types of resources.

The TSMS also serves as a QoS wrapping framework for simple applications which are not able to express quality requirements to the underlying terminal and network control architectures.

The invention shields the user and the applications from the fast and unpredictable evolution of network and computer technologies. In this way, applications and network resources can be harmonised, yielding an efficient information transfer, even if application and network providers work independently.

The terminal resources are not taken into account during negotiation on the configuration, although the content provider's terminal, e.g. a WWW server, is often a performance bottleneck. TSMS can deal with this problem as well.

According to a first aspect of the present invention, there is provided a teleservice management system adapted to manage a plurality of complex teleservices, said teleservice management system including a service control module arranged to provide a user with a graphical interface adapted to enable said user to provide data on a required QoS and other parameters, relating to a teleservice which the user wishes to invoke, means for storing information relating to service definitions, and modelling means for building an object oriented teleservice model from a request for service, received from said graphical interface via said service control module, using a default mapping between teleservice layer entities and bearer service layer entities.

Said object oriented teleservice model is adapted to describe abstract service components, including parties to the service, communication media and relationships, together with terminal resources and network resources to be employed in realising a requested teleservice.

Said teleservice model also includes a rule set which includes:

- rules for scaling the teleservice;

- a minimum set of mandatory service components; and

- permissions of the parties to the service.

Said teleservice management system is adapted to support a dialogue between a user and said service control module, conducted via said graphical interface and employing a user oriented language from which said teleservice management system can derive data needed to set up and manage a teleservice.

Said teleservice model may include terminal profiles, and means may be provided for using said rule set and terminal-profiles to scale terminal and network resources in a coordinated manner.

Said teleservice management system may be adapted to enable a user to be party to a decision process rotating to scaling during a negotiation phase for setting up a teleservice, and once a teleservice has been established, said teleservice management system maybe adapted toguarantee all resources needed to maintain a QoS required by a user.

Said teleservice management system may be adapted to select a best realisation alternative for a teleservice taking into account:

- the rule set;

- compatibility between terminals; and

- a current network situation;

so that network and terminal resources are in balance with a teleservice application and user requirements.

Said teleservice management system may be adapted to provide low level traffic parameters to a Call Admission Control means and a Usage Parameter Control means.

Said teleservice management system may include a native ATM user application adapted to provide application scaleability and an assured quality to non-ATM applications.

Said teleservice management system may be implemented in software.

Said teleservice management system may be implemented entirely within a telecommunications network.

Said teleservice management system may be distributed between a telecommunications network and a single user equipment.

Said teleservice management system may be distributed between a telecommunications network and all user equipments.

Said teleservice management system may be distributed solely between all user equipments.

One of said plurality of complex teleservices may be a Movie-on-Demand service.

According to a second aspect of the present invention, there is provided a telecommunications system, logically split between an application layer, a teleservice layer, a bearer service layer and a resource layer, characterised in that said teleservice layer includes a teleservice management system as set forth in any previous paragraph.

According to a third aspect of the present invention, there is provided a method of managing a plurality of complex teleservices, providing a user with a graphical interface adapted to enable the user to provide data on a required QoS and other parameters, relating to a teleservice which the user wishes to invoke, storing information relating to service definitions, and building an object oriented teleservice model from a request for service, received from said graphical interface, using a default mapping between teleservice layer entities and bearer service layer entities.

Said object oriented teleservice model describes abstract service components, including parties to the service, communication media and relationships, together with terminal resources and network resources to be employed in realising a requested teleservice.

Said teleservice model also includes a rule set which includes:

- rules for scaling the teleservice;

- a minimum set of mandatory service components; and

- permissions of the parties to the service.

A dialogue may be conducted between a user and said service control module, via said graphical interface, and a user oriented language may be employed for said dialogue from which said teleservice management system can derive data needed to set up and manage a teleservice.

Said teleservice model may include terminal profiles, and may us said rule set and terminal profiles to scale terminal and network resources in a coordinated manner.

A user may be party to a decision process relating to scaling during a negotiation phase for setting up a teleservice, and all resources needed to maintain a QoS required by a user, once a teleservice has been established, may be guaranteed.

A best realisation alternative for a teleservice may be selected taking into account:

- the rule set;

- compatibility between terminals; and

- a current network situation;

so that network and terminal resources are in balance with a teleservice application and user requirements.

Low level traffic parameters may be provided to a Call Admission Control and a Usage Parameter Control.

A native ATM user application for providing application scaleability and an assured quality to non-ATM applications, may be provided.

Said method may be implemented in software.

Said software may be located entirely within a telecommunications network.

Said software may be distributed between a telecommunications network and a single userequipment.

Said software may be distributed between a telecommunications network and all user equipments.

Said software may be distributed solely between all user equipments.

One of said plurality of complex teleservices may be a Movie-on-Demand service.

Embodiments of the invention will now be described, by way of example, with reference to the accompanying drawings and tables, in which:

Figure 1 is a schematic illustration of the environment of a Telecommunication Service.

Figure 2 is a graphical representation of the contents of Table 4.

Figure 3 is a block schematic illustration of the EMMA/SIGNE system.

Figure 4 illustrates an abstract overview of the movie-on-demand service.

Figure 5 is a schematic block diagram of a Teleservice model of the movie-on-demand service.

Figure 6 illustrates the simulation scenario for the movie-on-demand service.

Figure 7 illustrates a graph for the probability mass function of connection setup time for backward allocation.

Figure 8 shows the blocking probability of the foreground source vs. the number of background sources.

Figure 9 shows the blocking probability of background sources vs. the network load.

Figure 10 shows over-provisioning as a function of background source number.

Figure 11 shows the probability mass function of over-Provisioning (n=100 Background Sources, Node N1).

Figure 12 shows signalling intensity as a function of network load.

Figure 13 illustrates a logical overview of the TSMS, and its operating environment.

Figure 14 illustrates one possible configuration for TSMS.

Figure 15 illustrates another possible configuration for TSMS.

Table 1 lists objects of the telecommunication service description model.

Table 2 lists user quality levels.

Table 3 lists peak cell rate requirement for different quality settings,

Table 4 lists heuristic user preference for different quality settings.

In order to assist the reader to a better understanding of this patent specification, a glossary of some the abbreviations used herein is set out below:

| | |
|---|---|
| ABB | Application Building Block |
| AP | Application Provider |
| ASM | Abstract Service Module |
| CAC | Call Admission Control |
| EMMA | Experimental Middleware for ATM |
| IAPI | IP/ATM Protocol Interface |
| LVSI | Local View of Service Instance |
| MoD | Movie on Demand |
| NAP | Network Access Program |
| NAPI | Native ATM Protocol Interface |
| NP | Network Provider |
| PAE | Party ASM Edge |
| PE | Party Edge |
| QoS | Quality of Service |
| SI | Service Instance |
| SIC | Service Instance Control |
| SIGNE | Signalling Emulator |
| SM | Service Module |
| SMS | Service Management System |
| SU | Service User |
| TCSD | Telecommunication Service Description |
| TSP | Telecommunication Service Protocol |
| UPC | Usage Parameter Control |
| UQL | User Quality Level |
| USM | User Service Module |
| TP | Terminal Profile |

The present invention comprises a Teleservice Management System (TSMS), which includes the software used in complex teleservices. The relationship between the TSMS and its environment is illustrated in schematic form in Figure 1. Figure 1 clearly shows the relationship between the applications layer, the teleservice layer, the bearer service layer and the resource layer.

Related inventions are described in our co-pending patent applications, listed below. The co-pending patent applications are:

- Swedish patent application no. 520 571, which relates to a teleservice control protocol adapted to:

  - settle an agreement between session participants and the source control architecture within the terminals and the network;

  - control the dynamic behaviour of a teleservice session; and

  - update the state models of the teleservice session stored in the terminals and network; and

- European patent application no. 1 105 800, which relates to a service control graphical interface for facilitating communication between a Teleservice Management System and a system user.

The TSMS includes a service control module which provides the user with a graphical interface. Initially the user indicates his service request to the TSMS, providing the necessary parameters, e.g. concerning the parties he wants to involve and required quality of service. This dialogue is accomplished in a user-oriented language which the TSMS uses to compute the required information.

The TSMS has information on the service definitions and creates an object-oriented teleservice model, built up from the service request, using a default mapping between the teleservice and bearer service layer entities. This model describes both the abstract service components, such as the parties participating in the teleservice, communication media and relationships, and the terminal and network resources to be used for realization of the service.

The TSMS fulfils several actions using a variety of information provided by the teleservice model. The rule set - containing rules for scaling, the minimum set of mandatory service components and the permissions of the parties to the teleservice - and terminal profiles are used for scaling the terminal and network resources in a coordinated way. The user is involved in the decision process on scaling, which occurs only during the negotiation phase. Once a service is confirmed, the TSMS guarantees all necessary resources in order to keep the abstract level quality required by the user. However, the TSMS has freedom in choosing the best realization alternative, taking the rules of the teleservice, the compatibility among terminals and the current network situation, into account. In this way, the network and terminal resources are in balance with the application and the requirements of the users.

The TSMS provides low level traffic parameters to CAC (Call Admission Control) and UPC (Usage Parameter Control) functions according to the traffic profile. The system includes a native ATM user application built up from building blocks and aimed at application scaleablility, but it provides assured quality to non-ATM applications as well. The numerical results show that the TSMS can provide such information to the control architecture, which significantly increases the performance of the reservation process in terms of less over-provisioning, lower signalling intensity, and a more balanced load on the network nodes.

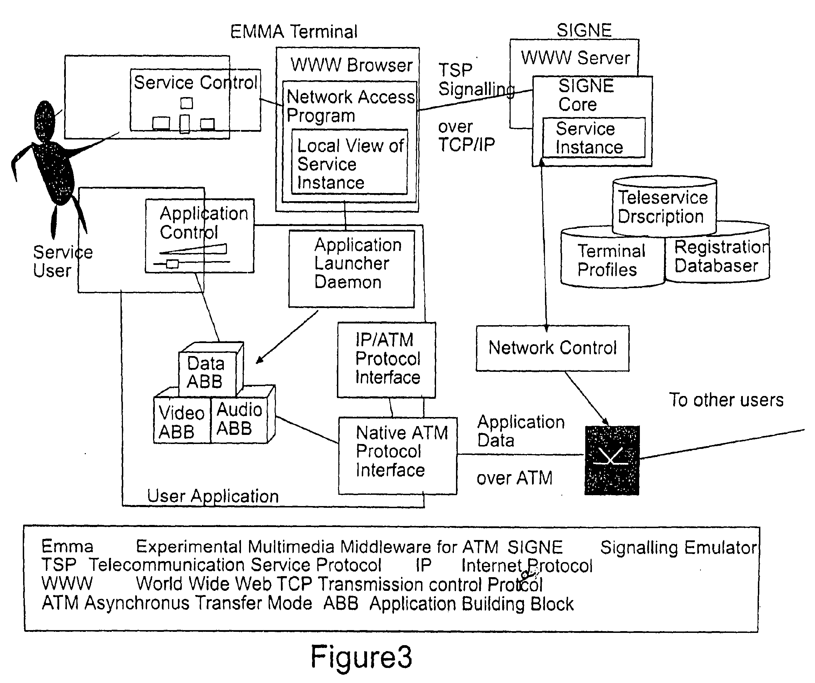

The TSMS inherently provides many different teleservices, each of which is defined in the teleservice description database, see Figure 3.

The TSMS may be implemented as a software-part of a teleservice and is, thus, part of a distributed software application covering network facilities and one, or more, user equipment's, typically a PC. The TSMS, itself, can be distributed in different ways, resulting in different configurations:

- the TSMS may be wholly implemented within the network;

- the TSMS may be wholly implemented in one user equipment;

- the TSMS may be implemented as distributed between the network and one user equipment;

- the TSMS may be implemented as distributed between the network and all user equipments; or

- the TSMS may be implemented as distributed between all user equipments.

The multimedia service management system of the present invention consists of two parts, a flexible terminal platform called EMMA and a flexible network emulator and management system called SIGNE. This system has been used to develop several aspects of distributed multimedia telecommunication services, such as:

- optimal allocation of telecommunication resources;

- service session management, division of functions between network and terminal; and

- communication with the user through the service control interface.

The main components of the SMS are shown in Figure 3.

The separation of the User Application, the Service Management System, the terminal and network Control Architectures and resources is clearly shown in Figure 3. The Network Access Program, Local View of Service Instance, SIGNE Core and Service Instance units form the SMS, which has the Service Control interface towards the Service User. The Control Architecture consists of the Application Launcher Daemon and Network Control units, which have access to the Application Building Blocks and Network Protocol Interfaces, as terminal, and to the ATM switching nodes, as network resources. The user can change certain attributes of the application directly through the Application Control interface.

The basic components of the TSMS are briefly described below.

Using a user friendly, graphical user interface, it is easier to retrieve information from naive users regarding the desired teleservice. The Service Control has a twofold task, as the user interface between the Service User and the EMMA terminal. Firstly, it has to present the status of the teleservice session to the user. Easy understanding is supported by metaphors in a life-like framework, e.g. there is a conference table with a big paper in the middle in the case of the multimedia conference service, see:

- N. Björkman, I. Cselényi, A. Latour-Henner, G. Záruba, The EMMA Multimedia Conference Service, first International Conference on Information, Communications & Signal Processing, Singapore, September 1997.

Secondly, it has to retrieve the wishes of the user related to the parameters of the teleservice. This is a translation mechanism, where high level, user friendly terms, e.g. audio connection with "very good" quality between-party X and Y, are translated to the teleservice model of the system. The resultant objects are still on an abstract level, called the Service Plane, where only the main components of the teleservice are visible and nothing is visible from the Bearer Service Layer entities on the Realisation Plane, the Realisation Plane specifies terminal and network resources, used in providing the teleservice, in detail. In order to reduce-complexity and avoid repetition of resource specification, each teleservice parameter is determined by the NP and AP, in advance, and grouped into alternative modules.

The Service Control is implemented in Java, since the object-oriented methodology and the WWW approach are beneficial for a user friendly interface, and the SMS is independent of the network connection and terminal platform.

A complex teleservice model is used for harmonizing the cooperation between the two management layers. Using object oriented methodology for building up such a model is quite a common solution, see:

- J.F. de Rezende, A. Mauthe, D. Hutchison, S. Fdida, M-Connection Service: A Multicast Service for Distributed Multimedia Applications, 2nd International COST 237 Workshop, Copenhagen, Denmark, November 1995, pp. 40-60: J. Weinstock;

- R. Tewari, An object-oriented approach to the management of distributed application systems, Computer Networks and ISDN Systems Vol. 29 No. 16. 1997, pp. 1869-1879.

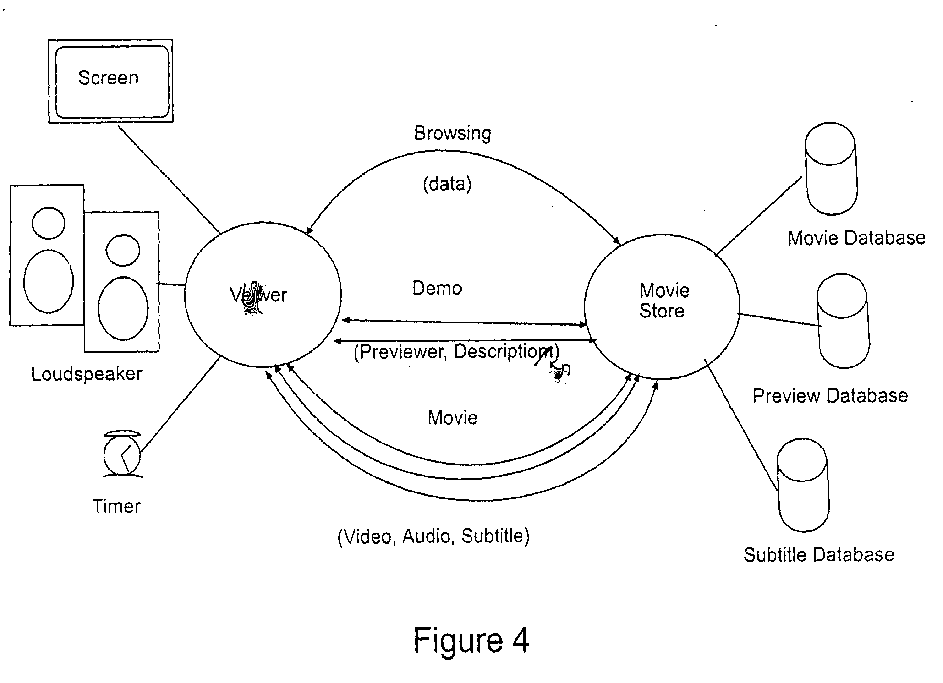

The Telecommunication Service Description (TCSD) model, used in the present invention, is based on the RACE MAGIC Service-Description framework. The AP and NP describes the teleservice in TCSD giving QoS and resource requirements, alternative ways for realization, permissions of parties, traffic behaviour, pricing parameters, etc. The TCSD model of the Movie-on-Demand service is depicted in Figure 4, as an example. The teleservice parameters are assigned to objects which are placed on several hierarchy levels. The levels on top form the aforementioned Service Plane, while the two bottom levels belong to the Realization Plane. There are seven objects in this model, see Table 1.

Since the Service User perceives only an abstract, simplified, view of the service, and requests the quality in a few, discrete quality levels (User Quality Levels), the SMS has a large degree of freedom in mapping it to specific resource modules on the Realization Plane, i.e. selecting adequate terminal and network modules according to considerations about mapping and scaling. In other words, the robust service request of the user makes the system scaleable. Each teleservice has a unique behaviour which is given in the T-CSD as a rule set. Firstly, these rules define the possible set of objects which are necessary for different service versions. The objects, whose presence is essential for the service, are marked as mandatory, while the others are marked as optional. Secondly, the downgrading, or scaling scheme, of the service should be described on each object level. Thirdly, the rules determine the permissions of different party types for changing the session.

The SIGNE and each EMMA terminal have different views of the Service Instance during the service session. The Service Plane and the relevant part of the Realization Plane are stored in the Local View of Service Instance (LVSI) in each terminal, while SIGNE has the complete view of the service stored in the Service Instance (SI). However, the LVSI stores some additional aspects, which are of local importance and should not be represented in the global view.

A Teleservice Layer signalling protocol is implemented in the EMMA/SIGNE system. The network and terminal side of the SMS communicate with each other using the Telecommunication Service Protocol (TSP) family, which consists of many protocol types for different purposes. Firstly, a protocol is needed in order to keep consistency among the models in the network and the terminals (SI and LVSI). The objects of the service model can be created, modified, or deleted, by the primitives of this protocol type called Service Instance Control (TSP/SIC). Secondly, the terminal gets the general description of the teleservice (TCSD), selected by the user, using the TSP/TCSD protocol. The Service Control is built up according to this description. Therefore, if the AP has changed the TCSD, the users will get the newest version. Thirdly, the SMS should have up-to-date information about the terminals for scaling and checking compatibility. This information is retrieved though the TSP/TP protocol and is stored in the Terminal Profile (TP) database in SIGNE. A matching protocol stack should be selected in case of multi-protocol terminals, while the incompatibility can be bridged by protocol conversion in other cases. The authentication of users proceeds using the TSP/Registration protocol. The Registration database stores a list of registered users. This database enables searches for potential participants in a new service session.

The TSP messages are transmitted over a TCP/IP protocol stack in EMMA/SIGNE, while the service data and eventual Bearer Service Layer protocol messages, are transferred between applications through the ATM network. Thus, the Teleservice Layer is well separated from the Bearer Service and Application Layers. The Network Access Program (NAP) and SIGNE Core process the TSP protocol on the terminal and network side, respectively. The main tasks of the NAP are:

- starting the components of EMMA;

- distributing and collecting messages inside the terminal; and

- communicating with SIGNE through the TSP protocol.

Although the name of NAP sounds like a functional part close to the physical layer, this is not the case. It is implemented as a Java applet which can be executed by the WWW browser of the Service User. NAP supports parallel sessions, i.e. many Service Controls and User Applications can be started by the same NAP. The LVSI of each session is built up and updated by the NAP, which is a general component in EMMA, i.e. it is independent from the specific teleservice.

Following the user oriented approach, the TSP/SIC protocol involves every service user in the decision process about abstract level service components and User Quality Levels. Therefore each transaction has four steps, in order to let the initiator and the invited users and terminals give their opinion and capability:

1. The initiator sets up a teleservice by selecting the Service Plane objects and the preferred quality levels through the Service Control interface. The NAP checks the validity of the request, allocates the available terminal resources through the Application Launcher Daemon and sends an Order message to SIGNE in which the Service Plane of the requested teleservice is given.

2. SIGNE checks:

- the validity of the request;

- the presence of parties to invite, i.e. whether they are registered, or not;

- the compatibility of terminals according to the Terminal Profile; and

- the available network resources through the control architecture (Network Control).

SIGNE downgrades the service, if necessary, and extends it with adequate Realization Plane objects (SM and ACE). SIGNE reserves the involved network resources, via Network Control, and sends the actual service model, in an Inquiry message, to the new parties and the initiator, defining the Realization Plane objects relevant to the given terminals.

3. Each invited EMMA terminal checks, through the Application Launcher Daemon, whether the necessary terminal resources are available, downgrades the model, if necessary, and informs the service user about the invitation. The user selects the preferred quality levels and Service Plane components of the proposed teleservice through the Service Control. The NAP updates the model stored in LVSI and sends a Reply message back to SIGNE, in which the accepted service-components are specified.

4. SIGNE finds the common subset of the accepted components and sends the result in the Confirmed State message to each EMMA terminal.

The same transaction steps are used for creation, modification and removal of service session components. Complex Orders may be realized in many separate steps, where only a subset of the model is confirmed at first and the rest later.

The EMMA/SIGNE Service Management System provides guaranteed QoS both for native ATM applications and for applications which are unable to express quality requirements.

Applications are registered to the SMS in advance and the pre-defined modules, in ACE objects, contain low level traffic descriptors which can be used for CAC and other sophisticated policing parameters, see:

- I. Cselényi, S. Molnár, N. Björkman, Leaky Bucket Analysis as a Practical Traffic Characterisation Tool, 5th IFIP Workshop on Performance Modelling and -Evaluation of ATM Networks, Ilkley, England, July 1997,

calculated from traffic measurements. In the case of traffic of a deterministic nature, the so called Leaky Bucket Curves coincide very well for repeated measurements of the same teleservice, running on the same terminal platform. Only the media and its quality setting do not determine these characteristics in itself. The knowledge of teleservice type, traffic behaviour and terminal resources, are all important for selecting adequate policing parameters. The low level traffic parameters given in the Traffic Profile are stored in the ACE objects of TCSD. These characteristics are used in the network for CAC and UPC for setting the parameters of the ATM network interface card. Because of the latter function, native ATM access is required. This is assured by the Native ATM Protocol Interface (NAPI) which is based on ATM Forum's Native ATM Services recommendation, see:

- ATM Forum Technical Committee, Native ATM Services: Semantic Description, 1995. The recent implementation of NAPI relies on the ATM API of Fore System's foreRunner SBA-200E ATM adapter.

A different approach is proposed for applications, which do not allow the user to define quality and do not understand the QoS language of the ATM network, e.g. applications designed for best-effort services. Besides the NAPI, other network protocol interfaces are also available in EMMA, e.g. the IP/ATM Protocol Interface (IAPI), in order to adapt non-ATM based applications. The efficiency of TCP/IP over ATM is doubted by several authorities, see:

- A. Romanow, S. Floyd, Dynamics of TCP Traffic over ATM Networks, Computer Communications Review, Vol. 24. No. 4. 1994, pp. 79-88.

Moreover, many IP over ATM solutions hide ATM's capability for ensuring QoS. Thus, the SMS should directly ask the service user about the desired quality and translate that request for the ATM network. Since these applications control the terminal resources themselves and do not use the EMMA middleware, the SMS can assure the service quality only in the network. The system has no access to the terminal resources, thus the SMS uses a simplified model which basically reflects only the bearer connections used by application data. Firstly, the user orders the teleservice by giving the end-points and UQL of connections through the Service Control. Then SIGNE checks the capabilities of the destination and sends an Inquiry message. The parties agree on the quality, SIGNE invokes two proxies at the access point of the terminals and allocates the necessary network resources between these proxies. The SU, or the Application Launcher Daemons of both EMMA terminals, start the application and give the network address of the proxy as destination terminal. The application connects to the proxy, which bridges the application data on the assured link. Therefore, apart from the access links, the information transfer is fulfilled with guaranteed QoS over the network. This mechanism is platform independent, transparent for the applications and suited to any protocol stack.

Since native ATM applications are also part of the EMMA/SIGNE system, the scaling of terminal and network resources and the application is performed in a coordinated way. Thus, SIGNE can keep consistency, compatibility and the rules prescribed for the teleservice. The scaling of any teleservice resources, or components, is reflected in the Service Instance model enabling intelligent seating. Moreover, SIGNE can save network resources by checking how much resource is potentially available for the specific teleservice on each terminal and adjusting network resources to that level on the connections to each terminal, separately.

The resources of the EMMA terminal are scaled in a simple way. If there are less terminal resources than required by the service, NAP deletes the relevant part of the LVSI model. Since SIGNE knows the terminal's capabilities from the Terminal Profile, this downgrading can take place only due to terminal overload. Besides the lack of resources, the Service User can also initiate down-scaling of the service by rejecting a proposed component, or decreasing the User Quality Level. The user perceives the effect of scaling initiated by users, or the lack of terminal resources. In spite of this, SIGNE is able to scale network and terminal resources, i.e. the SM and ACE objects on the Realization Plane, transparently for the users, without affecting the User Quality Levels.

The application designed for the EMMA/SIGNE system is also scaleable. The first User Application (UA) has been built for a Multimedia Conference service, which provides video and audio connection among participants and a shared, virtual working area, called a White Board, see:

- I. Cselényi, I. Szabo, P. Haraszti, N. Björkman, C. Gisgard. A Versatile Multimedia Platform, 15th IASTED International Conference on Applied Informatics, Innsbruck, Austria, February 1997, pp. 276-279.

The User Application presents the multimedia information conveyed through the data connections between the parties. In order to have a flexible terminal, from the point of view of both the application scaling and the number of supported multimedia services, the UA is built up from general purpose components, so called Application Building Blocks (ABB). An ABB is a small software component with a control and configuration interface for the handling of a specific medium. The Application Launcher Daemon starts the ABB of each specific media with a parameter set appropriate to the confirmed SM stored in the Demand Service LVSI.

Movie-on-Demand is a multi-party, multimedia teleservice which is suitable for illustrating the operation of the present invention and, in particular, the service modeling methodology and service management concept used by the present invention. The Movie-on-Demand, or Video-on-Demand, service is frequently used in the context of performance evaluation and management of broadband networks, see:

- P.H. Chu, R.S. Chang, A community VoD system based on a dual bus architecture, Computer Communications Vol. 21. No. 1. 1998, pp. 65-80;

- D. Deloddere, W. Verbiest, H. Verhille, Interactive Video-On-Demand, IEEE Communications Magazine, May 1994, pp. 82-88;

- T.D.C. Little, D. Venkatesh, Prospects for interactive Video-On-Demand, IEEE Multimedia, Fall 1994, pp. 14-24;

- W.C. Feng, Resource Allocation in Stored Video-On-Demand Systems, IEEE Real-Time Systems Symposium Workshop on Resource Allocation Problems in Multimedia Systems, Washington, DC, December, 1996,

thus the simulation study is also based on this teleservice. The choice has also been motivated by a marketing survey that showed that this service would be well received by residential multimedia users, see:

- I. Cselényi, Residential Multimedia, Marketing Research Report, Ericsson Austria AG., Vienna, Austria, 1997.

It is, thus, also of interest from the commercial point of view. If this service is introduced into the consumer market, the vast majority of the users would certainly be naive users without deep knowledge of traffic and QoS descriptors in a broadband network. An advanced Service Control that maps the wishes of the user to the terms of realization alternatives, therefore, seems to be beneficial.

Using the Movie-on-Demand (MoD) service herein described, End-Users (Viewers) can retrieve moving picture sequences of different size for the purpose of entertainment, or editing multimedia documents. The Viewer browses the catalogue of the AP (Movie Store) and gets a preview and description of selected movies. The preview is a highlight of a few minutes presented in low video quality format without audio. Based on this preview, the Viewer selects a movie and orders it. In the Order he can specify, the date and time of play-back and the quality level. The movie is presented to the End User in the form of synchronized video, audio and text (Subtitle).

The first step in creating a model is to draw an overview of the teleservice, see Figure 4. Using this overview, the participants can be identified and their role and rights can be described. Other Service Plane objects, such as USMs, shown in bold and ASMs, shown in brackets, are also visible in Figure 4.

The Movie Store receives the user's browsing requests, processes them and sends out the appropriate data file. The Movie Store maintains the movie and user databases, initiates the setup of Movie Download USM to the user at the given playing time, and controls the sharing of the movies and other terminal resources among the Viewers. This party can not initiate a new MoD session, but it can refuse to accept new requests if the Movie Store's terminal is out of resources. The Viewer terminal presents browsing information, previews and movies, to the user. It maintains a service description model and handles hardware and software devices which are needed to receive and present multimedia information. The Viewer can order and terminate MoD sessions any time.

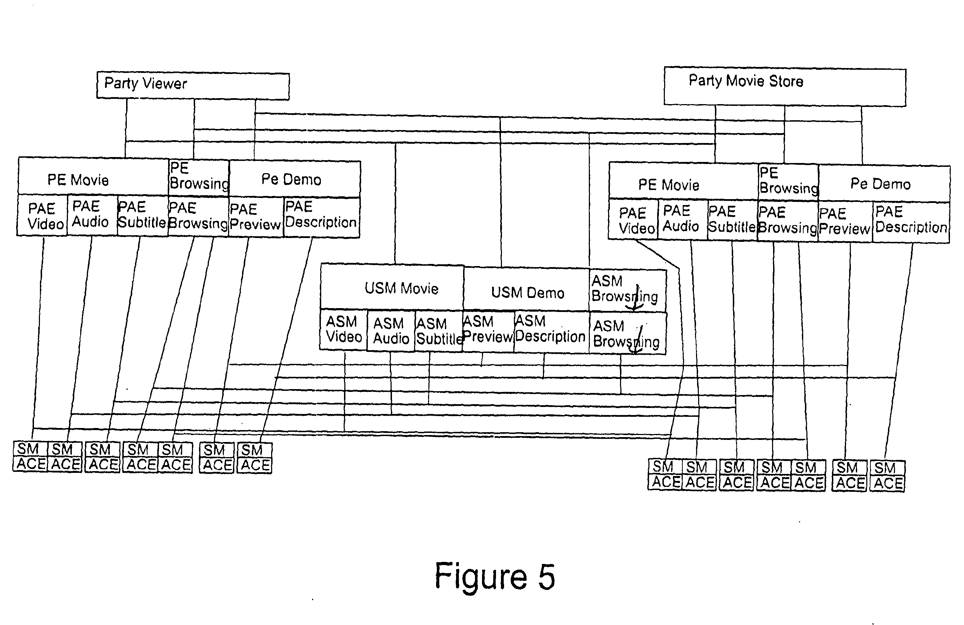

The object model representing the Movie-on-Demand service, in the present invention, is presented in figure 5. It contains mandatory and optional components and determines all possible configurations that can be a represented by a subset of objects. The Demo USM, Preview, Description and Subtitle ASMs are optional, while all the other objects are mandatory in this teleservice.

Information about terminal resources is stored in the Service Module objects. The terminal of the MoD Service Provider and Service User have many similar and some unique resources. The terminal resources considered in this teleservice include the following:

- hardware drivers that can frequently be used with mutual exclusion e.g. network device drivers;

- the data bus transfer capacity of the terminal platform;

- memory and eventual disk storage place;

- execution time on the terminal;

- processing power that determines the maximum number of users that can be served in parallel by the Movie Store;

- special input/output devices, e.g. Viewer's loudspeaker, are also used by mutual exclusion, therefore a sharing algorithm should be used if many independent applications would like to access them simultaneously; and

- software and hardware codec units, since even if multiple access is ensured, the performance drops drastically if many applications require services from the same module, especially in the case of video.

Information about network resources is stored in the Access Connection Element object. These comprise traffic parameters, such as the QoS class, the standardized ATM traffic descriptors and ATM connection identifier. This teleservice utilizes the following resources in the network:

- bandwidth for the bearer connections;

- size of buffer in switching elements that affects the delay and packet loss ratio;

- processing power of the signalling and switching nodes which affects, for example, connection setup time;

- input and output ports of the switching elements; and

- special functions provided by the NP, e.g. proxy, media combining, encryption, protocol conversion.

The following steps illustrate how the EMMA/SIGNE system provides the MoD service:

1. New Viewer parties subscribe to the MoD service. They are recorded as clients and Movie Store parties are registered as servers by the Network Provider and an account is given to them.

2. Registered Viewers are allowed to log in to the NP's web-site and access the WWW pages related to the MoD teleservice to which they subscribe. After successful login the EMMA terminal updates the terminal profile which is stored in SIGNE.

3. The viewer selects the MoD service of a Movie Store, and his terminal loads the corresponding service description model (TCSD) from SIGNE.

4. The service model is interpreted at the terminal side and presented to the Viewer who selects the desired optional components of the service, e.g. Subtitle ASM, or Demo USM, and specifies the UQL of each media through the Service Control. User Quality Levels for audio and video are illustrated in Table 2. Based on this selection, an object model of the session is created by EMMA and checked to determine whether, or not, it conforms to the service description model.

5. If it is consistent, the NAP reserves the corresponding terminal resources and transfers the Order to SIGNE. The setup of the MoD session -proceeds according to the steps described above.

6. If the Viewer initiates a modification of the session, for example, he does not want to have the Demo channel, EMMA changes the LVSI model and the modified parts of the model are sent to SIGNE as a new request. SIGNE checks consistency, updates the SI, scales the network resources and informs Movie Store about the changes.

7. Finally, when the session is over, the resources in the network and in the terminal are released.

The proposed Service Management System has been evaluated. The main question is, what are the benefits of having a Teleservice Layer management system above the Control Architecture, from the resource reservation's point of view? More specifically, it is necessary to consider what the underlying network and terminal control architectures gain from the SMS, in terms of accuracy and rapidity of allocation. Since both the Bearer and Teleservice Layer is represented by objects in the EMMA/SIGNE system, the SMS can coordinate and follow the reservation procedure made by the CA. The SM and ACE objects, in the Realization Plane, form the interfaces to the terminal and network control system, respectively. When the SMS modifies them, it takes the Service Plane parameters of the session, such as User Quality Level, User Service Module and Party type, into account. Thus, one way to perform this analysis is to quantify the performance of the bearer resource management with, and without, service management.

Several measures can be used for comparing the performance of bearer signalling protocols. Firstly, the Connection Setup Time, i.e. the time elapsed between a request and establishment of a connection. The number of rejected connection requests divided by the total number of requests, i.e. the Blocking Probability of connection requests, can be the second measure. If downgrading is enabled in the network, it implies that the Control Architecture allocates resources which become unnecessary and will be released later. This performance characteristic can be quantified by the Over-Provisioning factor, which characterizes the amount of surplus resources and the duration of their reservation. The processing of signalling messages also consumes some network resources, thus the Signalling Intensity, i.e. the total amount of atomic signalling messages, performed by a switching node, divided by the total number of connection requests, is also of value.

These measures are of different significance in relation to overall network performance and user satisfaction. Blocking Probability and Connection Setup Time are the most important basic metrics of signalling performance, see:

- D. Niehaus, et al., Performance Benchmarking of Signalling in ATM Networks, IEEE Communications Magazine, August 1997, pp. 134-143.

A longer connection setup time, or higher probability of blocking, is less acceptable from the user's perspective. If there is more Over-Provisioning, the blocking probability is higher during the time of connection setup. Signalling Intensity is more a design issue for dimensioning a switch's power, but it has some impact on Connection Setup Time too. Since these performance measures are defined for signalling protocols used for connection setup, i.e. during a relatively short transient phase, they have only a secondary effect on general network characteristics. A larger Over-Provisioning factor yields a lower throughput of active connections, since more bandwidth is taken for the establishment of the foreground connection. Similarly, higher Signalling Intensity results in less bandwidth for data traffic, if signalling and data messages use the same bandwidth as in radio networks.

The result of this analysis is very dependent on the availability of resources, i.e. the load in the network and in the terminal. There are basically four cases. If there are more available resources, both in the network and in the terminal than the competing services require, it has no impact on the performance of the protocol where the resources are first allocated. If congestion of connection requests occurs mostly in the network, the network resources have to be allocated first, while the terminal resources have to be allocated first in the opposite case. The most critical situation, overload everywhere, requires very sophisticated allocation schemes.

A simple model has, therefore, been established which simulates the resource reservation process, both in the network and in the terminal, according to three different-schemes. In the first two cases, the network-control architecture gets no information from the SMS regarding the teleservice session to be established. The first protocol, called Forward Allocation, reserves the network resources first, following the assumption that the network load is higher than the load of the destination terminal. The second protocol, called Backward Allocation, informs the destination terminal about the requested service first and lets it make the resource reservation in the terminal before the network. In the third scheme, called Hybrid Allocation, the SMS informs the control architecture of both the network and the destination terminal about the resources required by the teleservice.

By keeping the essence of the previously described Movie-on-Demand service, a simplified model is proposed. It is assumed that the Viewer, i.e. the End-User, is already registered and he has selected the movie by browsing in the database of the Movie Store. The next step is to create the Movie USM, i.e. to make a new connection for the moving picture sequence. Since the Video and Audio ASMs require substantially more bandwidth, in the Movie USM, than the Subtitle ASM, the Subtitle ASM is neglected. The Viewer orders the new service and the resources are reserved according to the three allocation schemes.

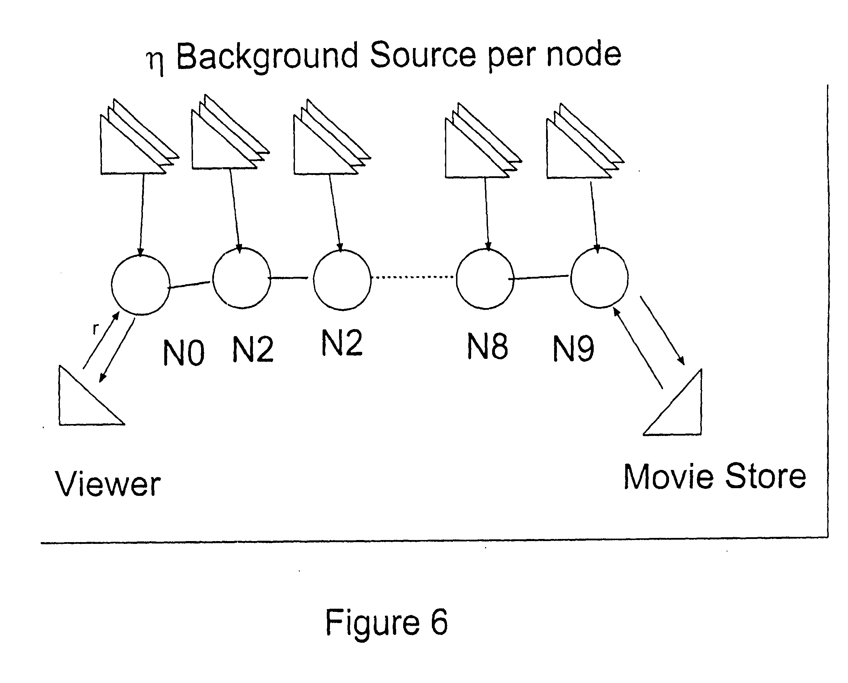

Since routing is outside the scope of this specification, a fixed route of ten network nodes (N0-N9) is given between the terminals of Viewer and Movie Store. The requests for audio and video connections are handled together, on the same route, since the corresponding ASMs need to be synchronized. Infinite switching capacity and a 155.2 Mbps output cell rate are assumed for the nodes. Each node receives the connection request of the foreground source, denoted by r in Figure 6, forwarded by its neighbouring node and the requests of n independent background sources connected to it. The background requests have different routes than NON9, i.e. there is only one serving node per background source. The nodes have a processing time of $T_N$=10 ms per signalling message, the terminals' response time is $T_T$=100 ms, while the propagation delay is neglected. Peak rate allocation is assumed in the nodes with no priority scheduling.

Both the Viewer and the background sources generate requests according to a Poisson process with $\lambda$ = 0.001 $s^{-1}$ arrival rate and $1/\mu$ = 1.00 s mean service holding time. A Poisson arrival and exponentially distributed service time has been shown to be a reasonable approximation for measured telephony traffic and this assumption has been used both for modelling personal communication services, see:

- W.C. Wong, Packet reservation multiple access in a metropolitan microcellular radio environment, IEEE J. Select. Areas Commun., Vol. 11, No. 6, 1993, pp.918-925;

- Y.B. Lin, I. Chlamtac, effective call holding times for PCS network, submitted for publication, available at hftp:// liny.csie.nctu.edu.tw/,

and integrated voice, video and data calls, see

- M.C. Yuang, Y.R. Haung, Bandwidth assignment paradigms for broadband integrated voice/data networks, Computer Communications, Vol. 21. No. 3. 1998, pp. 243-253; and

- D. Medhi, S. Guptan, Network Dimensioning and Performance of Multiservice, Multirate Loss Networks with Dynamic Routing, IEEE/ACM Trans. on Networking, Vol. 5. No. 6. December 1997, pp. 944-957.

There is only one requested network resource, namely the required bandwidth, i.e. Peak Cell Rate, considered in this simplified scenario and the others, such as buffer size and number of ports in switching elements are neglected. The terminal calculates the bandwidth request from the quality levels chosen by the user. There are two independent attributes of both the audio and video components with two User Quality Levels, i.e. sixteen different quality settings, see Table 2.

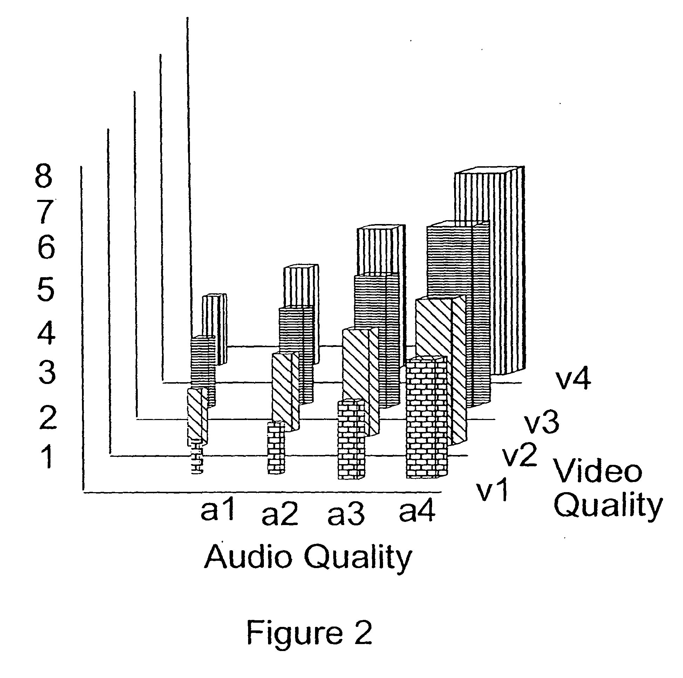

The peak cell rate demand of each quality setting is determined, based on these options, for compressed video and audio and given in 64 kbps units in Table 3. It is important to mention, that a one-to-one mapping is assumed between the User -Quality Levels and Service Modules for this simple scenario. However, there may be different SMs which correspond to the same User -Quality Levels in a full EMMA/SIGNE implementation, in order to let SIGNE chose between realization alternatives. Although there are 16 different settings, these are not Equally preferred by the End-User, since each implies different audio and video quality levels. The settings can be weighted based on simple psychological considerations. The preference is proportional to quality; video quality dominates the selection, but matching audio and video levels are preferred to unmatched values. A small survey on this topic gave the Preference Matrix shown in Table 4 and graphically illustrated in Figure 2.

The probability mass function of the bandwidth requested by the source can be retrieved from this Preference Matrix. Moreover, a Downgrade Vector can be defined, based on Table 3, which gives the discrete levels of teleservice resources, in this case bandwidth, which are meaningful for the application:

$$\mathbf{d} = [248\ 244\ 242\ 241\ 104\ 100\ 98\ 97\ 68\ 64\ 62\ 61\ 32\ 28\ 26\ 25] * 64\ kbps$$

In case of Forward Allocation the protocol tries to grab the resources in the network prior to those in the destination terminal:

1. The Viewer generates a bandwidth request and sends it into the network.

2. Each network node allocates the requested bandwidth, if it is available. If only less bandwidth is available, it reserves that amount and downgrades the request to this new value. The downgrading is, therefore, independent of the downgrade vector.

3. When the request message arrives at the Movie Store, it checks whether the implied bandwidth level is meaningful, for the application and downgrades it according to the downgrade vector, if necessary. If the bandwidth request is downgraded to zero, the connection setup is failed. If not, then the terminal resources are allocated on the Movie Store's side.

4. The Movie Store terminal sends back a confirmation message to the network in order to allocate the reserved resources for the session, and release the extra bandwidth allocations along the link.

5. When this message reaches the Viewer terminal, the connection setup is finished and the application-can be started.

In spite of the previous scheme, Movie Store is considered as the most critical resource for this teleservice and very simple nodes are assumed which are not able to downgrade a request.

1. The Viewer sends only an informative request message to the Movie Store asking for a movie connection.

2. The nodes forward the message, without processing it, and the Movie Store terminal checks and allocates its available terminal resources. It selects a quality level, according to its allocated terminal resources and generates a request based on that.

3. The network nodes try to allocate the requested bandwidth. If all nodes along the path can allocate the requested bandwidth and the message reaches the Viewer terminal, the connection is set up and the application can be started. However, if the available bandwidth on any node is less than that requested, that node sends back a reject message to the Movie Store.

4. The Movie Store downgrades the request, according to the downgrade vector, releases the extra terminal resources and sends a new, downgraded request. The procedure iterates on step 3 until the connection is established, or failed, i.e. the requested bandwidth reaches zero.

The main difference between the hybrid allocation, discussed below, and the previous schemes, is that the Service Management System, i.e. both EMMA and SIGNE, are involved in the connection setup through the transfer of information about the teleservice to the terminal and network Control Architectures. In this simplified scenario, this information is equivalent to the downgrade vector. Another enhancement is that intelligent network nodes are assumed which can interpret this vector and send signalling messages both forward and backward. This enables a quick scaling of network resources.

1. Firstly, the EMMA Network Access Program of the Viewer sends an order to SIGNE through the TSP/SIC protocol.

2. SIGNE builds up the Service Instance model and calculates the downgrade vector which will be sent through the network Control Architecture to the first node (N0).

3. The nodes check their resources and allocate the requested bandwidth, if it is available. If not, they:

- downgrade the request according to the vector,

- forward the new, downgraded, request to the next node; and simultaneously

- send back a release message for the extra reserved bandwidth to the previous nodes.

4. When the last node (N9) is ready with the reservation, it informs SIGNE about the final bandwidth value, through the network Control Architecture. SIGNE selects the SM and ACE modules, according to this information, and sends an Inquiry message to both the Viewer and the Movie Store through the TSP/SIC protocol.

5. When this message reaches the terminals, the connection setup is finished and the application can be started.

It should be noted that the Reply and Confirmed State messages are omitted in order to have a scheme which is comparable to the other two. According to the original TSP/SIC protocol, both parties should send a Reply message to SIGNE, which analyses these Replies, finds the common subset of the wishes and eventually releases the extra resources through the control architecture. Theparties are informed about the final status through the Confirmed State message.

It can be seen that this protocol is more complicated than the previous two, but it tries to provide a trade off between complexity and over-provisioning.

The performance of the three aforementioned protocol schemes can be compared using the previously defined measures.

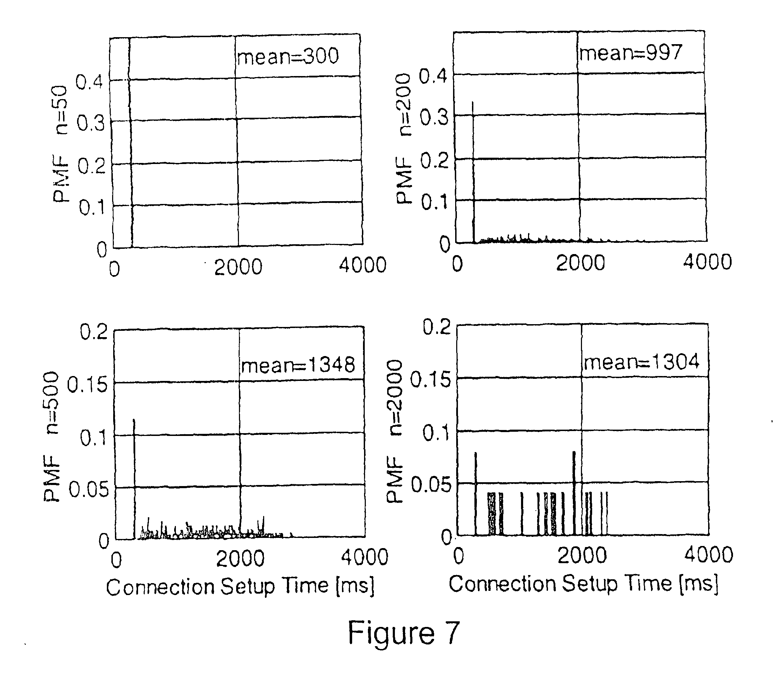

The Connection Setup Time is determined by the allocation scheme. It is a constant value for Forward and Hybrid Allocation ($20T_N + T_T = 300$ ms), while it is changing for the Background scheme proportionally to the network load. It can be clearly seen from Figure 7, that the mean Connection Setup Time is equal to that of the other schemes for moderate network load (n = 50), while a much longer time, up to a factor four, is required in case of heavy congestion (n > 500), due to the repeated trials of the Backward scheme. The probability mass function (PMF) of the connection setup time is also depicted. The probability mass disperses as the congestion increases. There are discrete time values which occur more than others, according to the basic time parameters of the simulation model, such as switching time of 10 ms, terminal response time of 100 ms, etc.

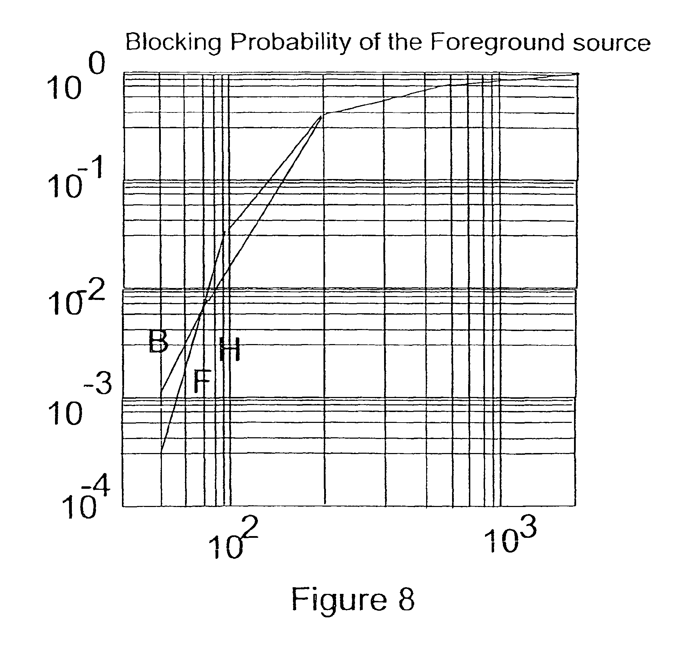

The blocking probability is calculated for different load situations, i.e. different numbers of background sources connected to each node. Three network load regions can be differentiated in Figure 8; the regions of small, medium and large congestion. The blocking probability for the requests of the foreground source is practically the same in case of Forward and Hybrid Allocation schemes in each region. The backward allocation performs worse in the region of small congestion (0 < n < 90), but it has better results than the other two allocation schemes in the case of medium congestion levels (90 < n < 200) and each curve coincides in the large congestion region (n > 200). Since a blocking level larger than 1% is hardly acceptable for quality oriented applications and each scheme has a larger probability of blocking in the second and third regions, it can be concluded that the Forward and Hybrid schemes are better in practical cases. However, this fact requires a more detailed evaluation for other service time distributions and other networks, which differ in size and topology.

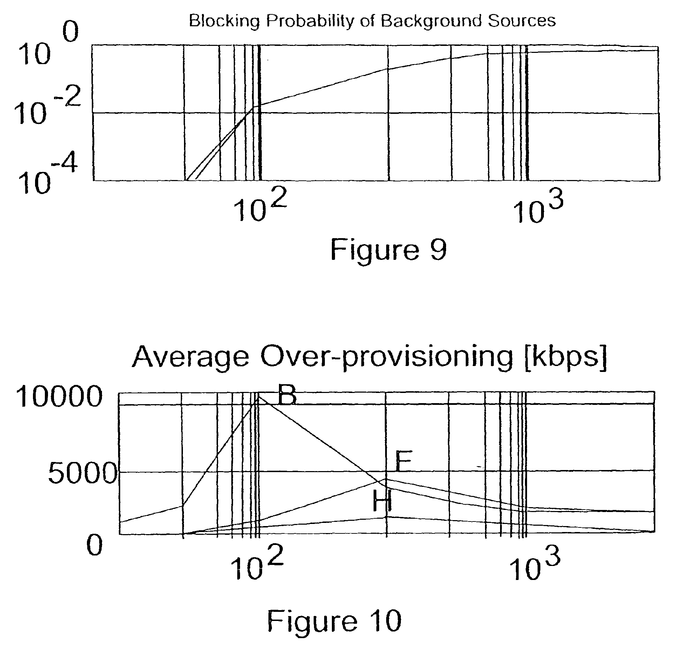

Each background source generates connection requests for its node in an independent manner. The average Blocking Probability of background requests connected to the same node is, therefore, evaluated in the case of every node and for different congestion situations. Results for the first and last nodes (N0, N9) are depicted in figure 9.

There is no noticeable difference between the blocking characteristics except for the region of small congestion. The Forward and Hybrid allocation schemes perform very similarly, since both methods downgrade the request according to the downgrade vector in the destination terminal, or in the network nodes, respectively. It is Interesting to note that the Backward scheme has better results on the first node (N0) but produces higher blocking probabilities on the last node (N9). This is because the foreground source loads the network nodes with atomic signalling messages in an unbalanced way in the case of Backward allocation. The nodes closer to the destination terminal should process many more messages than the first nodes, due to the iterative allocation scheme, i.e. this is a location biassed protocol using the terms presented in:

L. Barnett, The Space Division Multiple Access Protocol: asynchronous implementation and performance, Computer Communications, Vol. 21. No. 3. 1998, pp. 227-242.

The general conclusion regarding the results of blocking probability is that the three schemes have a very similar performance.

During the connection setup, the nodes do not always allocate all the previously reserved bandwidth, but release the bandwidth which is not needed because of a downgrading of the original request. The amount of this surplus reserved bandwidth and the duration of over-provisioning are analyzed by the Over-Provisioning factor.

In Figure 10, the average of over-provisioned bandwidth is drawn for the second and eighth node as a function of the network load. It can be seen that the first and last nodes are special both from the Backward, or the Hybrid, Allocation's, point of view. The Backward approach does not allow downgrading in the nodes, thus there is no over-provisioning on node N0. This location bias is the reason for taking N1 and N8 instead of the edge nodes. Although the curves get closer to each other in the large congestion region (n > 200), the Backward allocation clearly has the worst performance, and the hybrid allocation the best. The declination above n=100 background nodes can be explained by saturation in the network. As is clearly shown Figure 10, the Hybrid scheme can use the knowledge of the downgrade vector very well, i.e. the SMS can provide useful information to the Control Architecture.

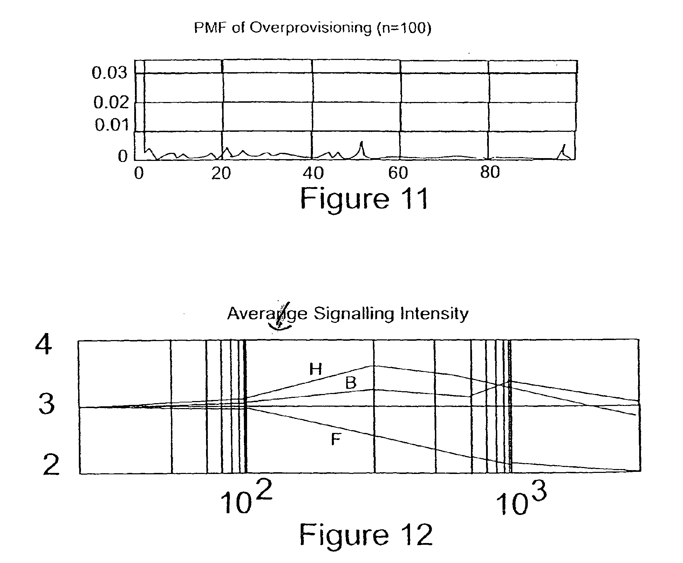

It is also worthwhile checking the probability mass function for different over provisioning steps. It can clearly be seen, in Figure 11, that there are discrete levels of the bandwidth which are reserved and released due to the discrete downgrade vector. The discreteness is significant, in the case of the Backward scheme, since there is no downgrading in the network, and only Movie Store's terminal follows the downgrade vector. The shape of the curves of Forward and Hybrid Allocations are quite close to each other, however the Hybrid scheme performs better.

The Signalling Intensity is calculated as the ratio of the number of atomic signalling messages, such as reserve, allocate, reallocate and release, and the total number of foreground source requests processed by a switching node. Since this value is also dependent on the node's position, results are depicted in Figure 12 for the nodes on the edges of the network (N0, N9).

In case of the first node (N0), the number of signalling messages is the highest for the Hybrid scheme, but only in the medium congestion region (90 < n < 200), and each curve declines in the case of high congestion. The reason for the former observation is that the number and frequency of downgrading and reallocation actions increases when the load is higher, in case of Hybrid Allocation, since the first node should process every reallocation message coming from the upper nodes, besides the three basic messages (reserve, allocate and release). The latter phenomena is caused by the higher number of rejected connection requests, i.e. shorter setup procedures, in case of higher congestion.

In spite of the graph referred to above, the Forward and Hybrid schemes produce exactly the same characteristics for the last node (N9), while the Backward curve has a jump in the medium congestion region. This observation underlines the aforementioned fact, that the Backward allocation causes a very unbalanced load for the switching elements, from the point of view of both the blocking probability and the signalling intensity. Although the Hybrid allocation also requires somewhat more processing of atomic signalling messages, in the case of the first node, this difference is minor.

As has been described above, the present invention incorporates a multilayer management approach for multi-party, multi-connection, multimedia teleservices, with a separated Service Management System in the Teleservice Layer and Control Architecture in the Bearer Service Layer. Several problems associated with novel teleservices have been described and analyzed in this specification, based on related publications and comparisons with the telephony service. Solutions for these problems have been described using the EMMA/SIGNE Service Management System. Operation of the EMMA/SIGNE Service Management System has been described, both in general terms and with reference to an illustrative example, namely the Movie-on-Demand service. The benefits of using an SMS, from the resource reservation's point of view, have been highlighted by a simulation study analyzing the performance of three different resource allocation schemes.

The EMMA/StGNE management system retrieves the characteristics of the requested teleservice with a graphical user interface which provides modular service components, pre-defined by the network and application provider, to naive service users. An object-oriented teleservice model is built up from this request for service management using a default mapping between the teleservice and the bearer service layer entities. This model describes both the abstract service components, such as parties, communication media and relations, and the terminal and network resources to be used for realization of the service. The SMS fulfills several actions using different information given in this model. The rule set - containing rules for scaling, the minimum set of mandatory service components and permissions of parties - and terminal profile are used for scaling the terminal and network resources in a coordinated way. In spite of many recent scaling approaches, the user is involved in the decision process on scaling which occurs only during the negotiation phase. Once a service is confirmed, the SMS guarantees all necessary resources in order to keep the abstract level quality required by the user. However, the SMS has freedom in choosing the best realization alternative taking the rules of the teleservice, compatibility among terminals and the current network situation, into account. In this way, the network and terminal resources are in balance with the application and the requirements of the users. The SMS provides low level traffic parameters to CAC and UPC functions according to the traffic profile. The system includes a native ATM user application built up from building blocks and aimed at application scaleablility, but it provides assured quality to non-ATM applications as well.

The present invention can be used in association with many different types of teleservices, or -computer applications. It is of especial value in relation to complex teleservices, i.e. a services involving multi-party, multi-connection and/or multimedia. Likewise TSMS is of great value when the service has to be able to take many different options into account with regard to type of user equipment, or type of communication facilities. The TSMS includes generic means for handling these types of complexity.

Furthermore, the present invention is also applicable in the case of legacy applications, e.g. IP based programs, as a QoS wrapping framework.

To launch a new multi-media service is a very substantial task for an operator, if the service was to be created from scratch. The present invention provides a generic method for developing new services which facilitates an evolutionary unfolding of the new services.

TSMS can also be of value to application providers, especially if the TSMS concept is implemented as part of an operating system with networking capabilities. It provider a new API for application designers.

Traditionally, a newservice like a video conference service is constructed in a block, and supported by new tailored signalling between network and terminals. This means that creating and launching a new service is an onerous task. The present invention makes the development of new complex teleservices, or new complex multi-user applications, much easier.

The principle inventive concepts underlying the present invention will now be briefly reviewed.

The Teleservice Management System, TSMS, provides overall service management functions thereby solving a number of problems related to Teleservices in general, and to complex Teleservice in particular, i.e. a service involving multi-party, multi-connection and/or multimedia. In particular, the invention will solve the following problems:

1. TSMS relieves the user from having to provide elaborated and comprehensive technical descriptions in order to invoke a teleservice and indicate service quality aspects.

2. The SU can not usually express his -QoS preference, since applications do not ask for it. Thus, the TSMS has an own Service Control interface for interaction with the user.

3. Allocation and release of telecommunication applications and resources in terminals and network.

4. Co-ordination and integration of telecommunication applications and resources in terminals and network.

5. Control of these resources, from the service point of view, thereby maintaining the required quality of service, e.g. adapting resources like communication bearer capabilities according to different, or shifting, circumstances.

6. The TSMS principles provide a general scheme for constructing new teleservices which facilitates the service definition in general, and provides a systematic way of handling the different options of the service, which may otherwise quickly turn into an unmanageably large set of possible variants of the service.

7. The TSMS makes it possible to create new complex services by including existing, legacy, applications and communication facilities as components integrated within the new service. Thereby existing standard applications and standard communication facilities can become building blocks in more complex teleservices.

8. The present invention promotes the evolution of new potential business segments for service providers by forming the Teleservice Layer and facilitating Teleservices which they can provide, instead of reselling, the applications, or the network connectivity.

10. Fast service creation is promoted by the re-use of components in TSMS.

11. TSMS also serves as a QoS wrapping framework for simple applications which are not able to express quality requirements to the underlying terminal and network control architectures.

12. The present invention shields the user and applications from the rapid and unpredictable evolution of network and computer technologies. In this way, applications and network resources can be harmonised, yielding an efficient information transfer, even if application and network providers work independently.

13. With existing system terminal resources are not taken into account during negotiations relating to system configurations, although the content provider's terminal, e.g. a WWW server, is often a performance bottleneck. TSMS can deal with this as well.

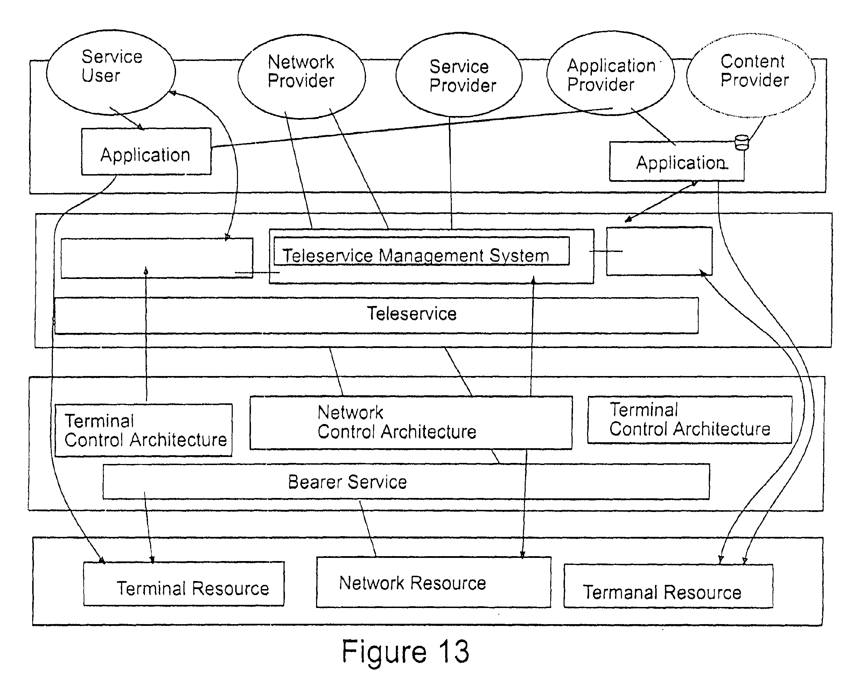

The present invention comprises a Teleservice Management System (TSMS), which can be implemented as software to be used in complex teleservices. The relation between the TSMS and its environment is outlined in Figure 13.

The TSMS includes a service control module which provides the user with a graphical interface. Initially, the user indicates his service request to the TSMS. This gives the user a mechanism to provide parameters, required by the teleservice, for example, the parties to be invited to participate in the teleservice and the desired quality of service. This dialogue is accomplished in a user-oriented language which the TSMS uses to compute the required information.

The TSMS has information on the service definitions and creates an object-oriented teleservice model which is built up from the service request using a default mapping between teleservice layer entities and bearer service layer entities. This model describes both the abstract service components (such as parties, communication media and relations) and the terminal and network resources to be used for realization of the service.

The TSMS fulfils several actions using different information given in the teleservice model. The rule set, containing rules for scaling, the minimum set of mandatory service components and permissions of parties, and terminal profiles are used for scaling the terminal and network resources in a coordinated manner. The user is involved in the decision process on scaling which only occurs during the negotiation phase. Once a service is confirmed, the TSMS guarantees all necessary resources in order to keep the abstract level quality required by the user. However, the TSMS has freedom in choosing the best realization alternative taking the rules of the teleservice, the compatibility among terminals and the current network situation into account. In this way, the network and terminal resources are in balance with the application and the requirements of the users.

The TSMS provides low level traffic parameters to CAC (Call Admission Control) and UPC (Usage Parameter Control) functions according to the traffic profile. The system includes a native ATM user application built up from building blocks and aimed at application scaleablility. In addition, it provides assured quality to non-ATM applications. The numerical results show that the TSMS can provide such information to the control architecture, which significantly increases the performance of the reservation process in terms of less over-provisioning, lower signalling intensity, and a more balanced load on the network nodes.

The TSMS inherently provides many different teleservices, each of which is defined in the teleservice description database, see figure 3. Figure 3 shows the components of a teleservice management system, according to the present invention, and is self explanatory.

As previously explained, the TSMS can be realised as a software-part of a teleservice, and can thus be part of a distributed software application covering network facilities and one, or more, user equipment's, typically a PC. The TSMS itself can be distributed in a number of different ways, resulting in different system configurations, for example:

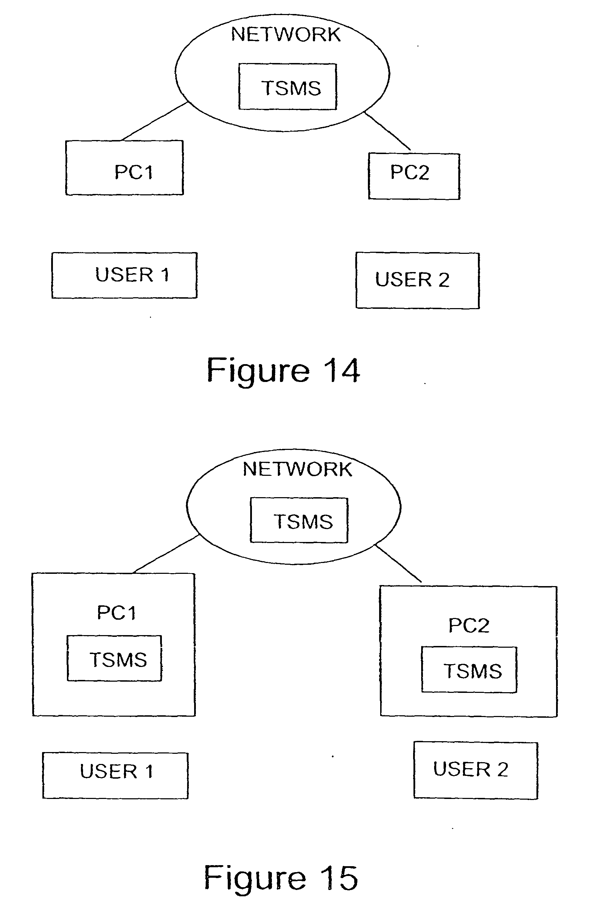

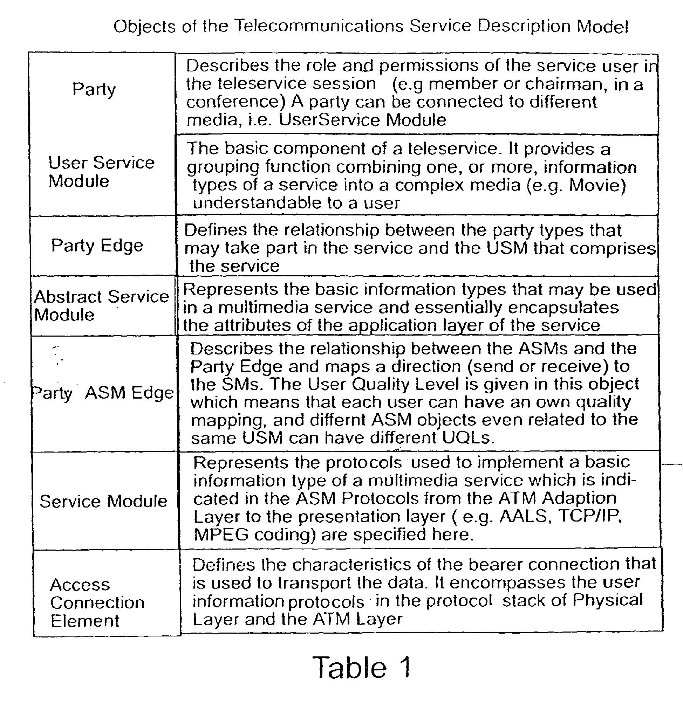

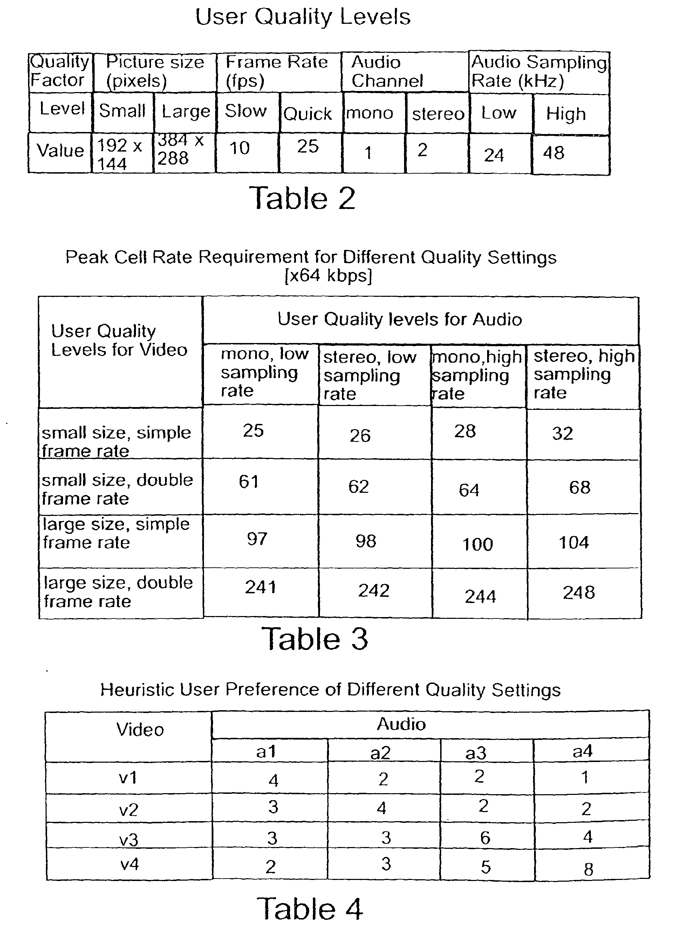

- TSMS may be wholly implemented within the network, as illustrated in Figure 14;

- TSMS may be wholly implemented in one user's equipment;

- TSMS may be implemented as distributed between the network and one user's equipment;

- TSMS may be implemented as distributed between the network and all users' equipments, see figure 15, or

- TSMS may be implemented as distributed between all users' equipments.

## Claims

1. A teleservice management system adapted to manage a plurality of complex teleservices, said teleservice management system including a service control module arranged to provide a user with a graphical interface adapted to enable said user to provide data on a required QoS (Quality of Service) and other parameters, relating to a teleservice which the user wishes to invoke, means for storing information rotating to service definitions, and modelling means for building an object oriented teleservice model from a request for service, received from said graphical interface via said service control module, using a default mapping between teleservice layer entities and bearer service layer entities, **characterised in that** said object oriented teleservice model is adapted to describe abstract service components, including parties to the service, communication media and relationships, together with terminal resources and network resources to be employed in realising a requested teleservice, and **in that** said teleservice model includes a rule set which includes:

   - rules for scaling the teleservice;
   - a minimum set of mandatory service components; and
   - permissions of the parties to the service.

2. A teleservice management system as claimed in claim 1, **characterised in that** said teleservice management system is adapted to support a dialogue between a user and said service control module, conducted via said graphical interface, employing a user oriented language from which said teleservice management system can derive data needed to set up and manage a teleservice.

3. A teleservice management system as claimed in claim 1, **characterised in that** said teleservice model includes terminal profiles, and **in that** means are provided for using said rule set and terminal profiles to scale terminal and network resources in a coordinated manner.

4. A teleservice management system as claimed in any previous claim, **characterised in that** said teleservice management system is adapted to enable a user to be party to a decision process relating to scaling during a negotiation phase for setting up a teleservice, and **in that** once a teleservice has been established, said teleservice management system is adapted to guarantee all resources needed to maintain a QoS required by a user.

5. A teleservice management system as claimed in claim 3, **characterised in that** said teleservice management system is adapted to select a best realisation alternative for a teleservice taking into account:

   - the rule set;
   - compatibility between terminals; and
   - a current network situation;

   so that network and terminal resources are in balance with a teleservice application and user requirements.

6. A teleservice management system as claimed in any previous claim, **characterised in that** said teleservice management system is adapted to provide low level traffic parameters to a Call Admission Control means and a Usage Parameter Control means.

7. A teleservice management system as claimed in any previous claim, **characterised in that** said teleservice management system includes a native ATM (Asynchronus Transfer Mode) user application adapted to provide application scaleability and an assured quality to non- ATM applications.

8. A teleservice management system as claimed in any previous claim, **characterised in that** said teleservice management system is implemented in software.

9. A teleservice management system as claimed in claim 8, **characterised in that** said teleservice management system is implemented entirely within a telecommunications network.

10. A teleservice management system as claimed in claim 8, **characterised in that** said teleservice management system is distributed between a telecommunications network and a single user equipment.

11. A teleservice management system as claimed in claim 8, **characterised in that** said teleservice management system is distributed between a telecommunications network and all user equipments.

12. A teleservice management system as claimed in claim 8, **characterised in that** said teleservice management system is distributed solely between all user equipments.

13. A teleservice management system as claimed in any previous claim, **characterised in that** one of said plurality of complex teleservices is a Movie-on-Demand service.

14. A telecommunications system, logically split between an application layer, a teleservice layer, a bearer service layer and a resource layer, **characterised in that** said teleservice layer includes a teleservice management system as claimed in any of claims 1 to 13.

15. A method of managing a plurality of complex teleservices providing a user with a graphical interface adapted to enable the user to provide data on a required QoS and other parameters, relating to a teleservice which the user wishes to invoke, storing information relating to service definitions, and building an object oriented teleservice model from a request for service, received from said graphical interface, using a default mapping between teleservice layer entities and bearer service layer entities, **characterised by** said object object oriented teleservice model describing abstract service components, including parties to the service, communication media and relationships, together with terminal resources and network resources to be employed in realising a requested teleservice, and **by** said teleservice model including a rule set which includes:

   - rules for scaling the teleservice;
   - a minimum set of mandatory service components; and
   - permissions of the parties to the service.

16. A method as claimed in claim 15, **characterised by** conducting a dialogue between a user and said service control module, via said graphical interface, and by employing a user oriented language for said dialogue from which said teleservice management system can derive data needed to set up and manage a teleservice.

17. A method as claimed in claim 15, **characterised by** said teleservice model including terminal profiles, and using said rule set and terminal profiles to scale terminal and network resources in a coordinated manner.

**18.** A method as claimed in any of claims 15 to 17, **characterised by** a user being party to a decision process relating to scaling during a negotiation phase for setting up a teleservice, and by guaranteeing all resources needed to maintain a QoS required by a user, once a teleservice has been established.

**19.** A method, as claimed in claim 18, **characterised by** selecting a best realisation alternative for a teleservice taking into account:

- the rule set;
- compatibility between terminals; and
- a current network situation;

so that network and terminal resources are in balance with a teleservice application and user requirements.

**20.** A method as claimed in any of claims 15 to 19, **characterised by** providing low level traffic parameters to a Call Admission Control and a Usage Parameter Control.

**21.** A method as claimed in any of claims 15 to 20, **characterised by** providing a native ATM user application for providing application scaleability and an assured quality to non-ATM applications.

**22.** A method as claimed in any of claim 15 to 21, **characterised by** implementing said method in software.

**23.** A method as claimed in claim 22, **characterised by** locating said software entirely within a telecommunications network.

**24.** A method as claimed in claim 22, **characterised by** distributing said software between a telecommunications network and a single user equipment.

**25.** A method as claimed in claim 22, **characterised by** distributing said software between a telecommunications network and all user equipments.

**26.** A method as claimed in claim 22, **characterised by** distributing said software solely between all user equipments.

**27.** A method as claimed in any of the claims 15-26, **characterised by** one of said plurality of complex teleservices being a Movie-on-Demand service.

**Patentansprüche**

**1.** Teledienstverwaltungssystem, das dazu ausgebildet ist, eine Mehrzahl von komplexen. Telediensten zu verwalten, welches Teledienstverwaltungssystem ein Dienststeuermodul, das dazu ausgebildet ist, einen Benutzer mit einer graphischen Schnittstelle zu versehen, die dazu ausgebildet ist, es dem Benutzer zu ermöglichen, Daten auf einer erforderlichen QoS (Quality of Service, Qualität des Dienstes) und andere Parameter zur Verfügung stellen, die sich auf einen Teledienst beziehen, den der Benutzer heranziehen will, Mittel zum Speichern von Information, die sich auf Dienstdefinitionen beziehen, und Modelliermittel einschließt, um ein objektorientiertes Teledienstmodell von einer Dienstanforderung aufzubauen, die von der graphischen Schnittstelle über das Dienststeuermodul empfangen worden ist, unter Verwendung von Vorgabeabbildung zwischen den Teledienstschichtgrößen und Trägerdienstschichtgrößen, **dadurch gekennzeichnet, dass** das objektorientierte Teledienstmodell dazu ausgebildet ist, abstrakte Dienstkomponenten einschließlich Parteien zu dem Dienst, Kommunikationsmedien und Beziehungen zusammen mit Endgeräteressourcen und Netzressourcen zu beschreiben, die bei der Realisierung eines angeforderten Teledienstes verwendet werden sollen, und dass das Teledienstmodell einen Regelsatz einschließt, der einschließt :

- Regeln zum Skalieren des Teledienstes;
- einen minimalen Satz von vorgeschriebenen Dienstkomponenten; und
- Zulassung der Parteien zu dem Dienst.

**2.** Teledienstverwaltungssystem nach Anspruch 1, **dadurch gekennzeichnet, dass** das Teledienstverwaltungssystem dazu ausgebildet ist, einen Dialog zwischen einem Benutzer und dem Dienststeuermodul zu unterstützen, der über die graphische Schnittstelle gerührt wird, wobei eine benutzerorientierte Sprache verwendet wird, von der das Teledienstverwaltungssystem Daten ableiten kann, die erforderlich sind, einen Teledienst einzurichten und zu verwalten.

3. Teledienstverwaltungssystem nach Anspruch 1, **dadurch gekennzeichnet, dass** das Teledienstmodell Endgeräteprofile einschließt und dass Mittel vorgesehen sind, den Regelsatz und Endgeräteprofile zu benutzen, um Endgeräte- und Netzressourcen in koordinierter Weise zu skalieren.

4. Teledienstverwaltungssystem nach einem der vorangehenden Ansprüche, **dadurch gekennzeichnet, dass** das Teledienstverwaltungssystem dazu ausgebildet ist, es einem Benutzer zu ermöglichen, Partei für einen Entscheidungsprozess, der sich auf Skalierung bezieht, während einer Verhandlungsphase zum Einrichten eines Teledienstes zu sein, und dass, wenn einmal ein Teledienst eingerichtet worden ist, das Teledienstverwaltungssystem dazu ausgebildet ist, alle erforderlichen Ressourcen zu garantieren, um eine QoS aufrechtzuerhalten, die durch einen Benutzer erfordert wird.

5. Teledienstverwaltungssystem nach Anspruch 3, **dadurch gekennzeichnet, dass** das Teledienstverwaltungssystem dazu ausgebildet ist, eine beste Realisierungsalternative für einen Teledienst auszuwählen und dabei berücksichtigt:

    - den Regelsatz;
    - Kompatibilität zwischen Endgeräten; und
    - eine gegenwärtige Netzsituation;

so dass Netz- und Endgeräteressourcen, mit einer Teledienstanwendung und Benutzeranforderungen ausgeglichen sind.

6. Teledienstverwaltungssystem nach einem vorangehenden Anspruch, **dadurch gekennzeichnet, dass** das Teledienstverwaltungssystem dazu ausgebildet ist, Verkehrsparameter niedrigen Pegels zu Rufzulassungssteuermitteln und Benutzungsparametersteuermitteln zu schaffen.

7. Teledienstverwaltungssystem nach einem vorangehenden Anspruch, **dadurch gekennzeichnet, dass** das Teledienstverwaltungssystem eine systemeigene ATM (Asynchronous Transfer Mode, asynchrone Übertragungsbetriebsart)-Benutzeranwendung einschließt, die dazu ausgebildet ist, Anwendungsskalierbarkeit und eine sichergestellte Qualität für Nicht-ATM-Anwendungen zu schaffen.

8. Teledienstverwaltungssystem nach einem vorangehenden Anspruch, **dadurch gekennzeichnet, dass** das Teledienstverwaltungssystem in Software implementiert ist.

9. Teledienstverwaltungssystem nach Anspruch 8, **dadurch gekennzeichnet, dass** das Teledienstverwaltungssystem vollständig innerhalb eines Telekommunikationsnetzes implementiert ist.

10. Teledienstverwaltungssystem nach Anspruch 8, **dadurch gekennzeichnet, dass** das Teledienstverwaltungssystem zwischen einem Telekommunikationsnetz und einer einzelnen Benutzerausrüstung verteilt ist.

11. Teledienstverwaltungssystem nach Anspruch 8, **dadurch gekennzeichnet, dass** das Teledienstverwaltungssystem zwischen einem Telekommunikationsnetz und allen Benutzerausrüstungen verteilt ist.

12. Teledienstverwaltungssystem nach Anspruch 8, **dadurch gekennzeichnet, dass** das Teledienstverwaltungssystem ausschließlich zwischen allen verteilt ist.

13. Teledienstverwaltungssystem nach einem vorangehenden Anspruch, **dadurch gekennzeichnet, dass** einer einer Mehrzahl von komplexen Telediensten ein Movie-on-Demand-Dienst (Film-auf-Verlangen-Dienst) ist.

14. Telekommunikationssystem, das logisch zwischen einer Applikationsschicht, einer Teledienstschicht, einer Trägerdienstschicht und einer Ressourcenschicht aufgespalten ist, **dadurch gekennzeichnet, dass** die Teledienstschicht ein Teledienstverwaltungssystem einschließt, wie es in einem der Ansprüche 1 bis 13 beansprucht ist.

15. Verfahren zum Verwalten einer Mehrzahl von komplexen Telediensten, die einen Benutzer mit einer graphischen

**EP 1 108 334 B1**

Schnittstelle versehen, die dazu ausgebildet ist, es dem Benutzer zu ermöglichen, Daten auf einer gewünschten QoS und andere Parameter zu liefern, die sich auf einen Teledienst beziehen, den der Benutzer heranziehen will, Information zu speichern, die sich auf Dienstdefinitionen beziehen, und ein objektorientiertes Teledienstmodell von einer Dienstanforderung aufzubauen, die von der graphischen Schnittstelle empfangen wird, unter Verwendung einer Vorgabeabbildung zwischen Teledienstschichteinheiten und Trägerdienstschichteinheiten, **dadurch gekennzeichnet, dass** das objektorientierte Teledienstmodell abstrakte Dienstkomponenten einschließlich Parteien zum Dienst, Kommunikationsmedien und Beziehungen, zusammen mit Endgeräteressourcen und Netzressourcen beschreibt, die verwendet werden sollen, um einen angeforderten Teledienst zu realisieren, und dadurch, dass das Teledienstmodell einen Regelsatz einschließt, der einschließt:

- Regeln zum Skalieren des Teledienstes;
- einen minimalen Satz von vorgeschriebenen Dienstkomponenten; und
- Zulassungen der Parteien zum Dienst.

16. Verfahren nach Anspruch 15, **gekennzeichnet durch** Durchführen eines Dialogs zwischen einem Benutzer und dem Dienststeuermodul über die graphische Schnittstelle und **durch** Verwendung einer benutzerorientierten Sprache für den Dialog, von dem das Teledienstverwaltungssystem Daten ableiten kann, die notwendig sind, um einen Teledienst einzurichten und zu verwalten.

17. Verfahren nach Anspruch 15, **dadurch gekennzeichnet, dass** das Teledienstmodell Endgeräteprofile einschließt und der Regelsatz und die Endgeräteprofile benutzt werden, um Endgeräte- und Netzressourcen in koordinierter Weise zu skalieren.

18. Verfahren nach einem der Ansprüche 15 bis 17, **dadurch gekennzeichnet, dass** ein Benutzer Partei für einem Entscheidungsprozess, der sich auf Skalierung bezieht, während einer Verhandlungsphase zum Einrichten eines Teledienstes ist, und durch Garantieren aller Ressourcen, die erforderlich sind, um eine QoS aufrechtzuerhalten, die durch einen Benutzer erfordert wird, wenn ein Teledienst einmal eingerichtet worden ist.

19. Verfahren nach Anspruch 18, **dadurch gekennzeichnet, dass** eine beste Realisierungsalternative für einen Teledienst ausgewählt wird, wobei berücksichtigt wird:

der Regelsatz;
Kompatibilität zwischen Endgeräten; und
- eine gegenwärtige Netzsituation;

so dass Netz- und Endgeräteressourcen, mit einer Teledienstanwendung und Benutzererfordernissen ausgeglichen sind.

20. Verfahren nach einem der Ansprüche 15 bis 19, **dadurch gekennzeichnet, dass** Verkehrsparameter niedrigen Pegels für eine Rufzulassungssteuerung und eine Benutzungsparametersteuerung geliefert werden.

21. Verfahren nach einem der Ansprüche 15 bis 20, **dadurch gekennzeichnet, dass** eine systemeigene ATM-Benutzeranwendung zum Liefern von Anwendungsskalierbarkeit und eine sichergestellte Qualität für Nicht-ATM-Anwendungen geschaffen, werden.

22. Verfahren nach einem der Ansprüche 15 bis 21, **dadurch gekennzeichnet, dass** das Verfahren in Software implementiert wird.

23. Verfahren nach Anspruch 22, **dadurch gekennzeichnet, dass** die Software ausschließlich innerhalb eines Telekommunikationsnetzes angeordnet wird.

24. Verfahren, nach Anspruch 22, **gekennzeichnet durch** Verteilen der Software zwischen einem Telekommunikationsnetz und einer einzigen Benutserausrüstung.

25. Verfahren nach Anspruch 22, **gekennzeichnet durch** Verteilen der Software zwischen einem Telekommunikationsnetz und allen Benutzerausrüstungen.

26. Verfahren nach Anspruch 22, **gekennzeichnet durch** Verteilen der Software ausschließlich zwischen allen Benutzerausrüstungen.

27. Verfahren nach einem der Ansprüche 15 bis 26, **dadurch gekennzeichnet, dass** eine der Mehrzahl von komplexen Telediensten ein Movie-on-Demand-Dienst (FiLm-auf-Verlangen-Dienst) ist.

## Revendications

1. Système de gestion de téléservices adapté pour gérer une pluralité de téléservices complexes, ledit système de gestion de téléservices comprenant un module de contrôle de service agencé pour fournir à un utilisateur une interface graphique adaptée pour permettre audit utilisateur de fournir des données concernant une QoS (qualité de service) requise et d'autres paramètres, en relation avec un téléservice que l'utilisateur souhaite invoquer, des moyens pour mémoriser des informations concernant des définitions de services, et des moyens de modélisation pour construire un modèle de téléservice orienté objet à partir d'une demande de service, reçue de ladite interface graphique par l'intermédiaire dudit module de contrôle de service, en utilisant un mappage par défaut entre des entités de couche de téléservice et des entités de couche de service support, **caractérisé en ce que** ledit modèle de téléservice orienté objet est adapté pour décrire des composantes de service abstraites, comprenant des parties participant au service, des supports de communication et des relations, ainsi que des ressources de terminaux et des ressources de réseau à utiliser pour réaliser un téléservice demandé, et **en ce que** ledit modèle de téléservice comprend un ensemble de règles qui comprend :

   des règles pour proportionner le téléservice ;
   un ensemble minimum de composantes de service obligatoires ; et
   des autorisations des parties participant au service.

2. Système de gestion de téléservices selon la revendication 1, **caractérisé en ce que** ledit système de gestion de téléservices est adapté pour prendre en charge un dialogue entre un utilisateur et ledit module de contrôle de service, effectué par l'intermédiaire de ladite interface graphique, en utilisant un langage orienté utilisateur duquel ledit système de gestion de téléservices peut déduire des données nécessaires pour établir et gérer un téléservice.

3. Système de gestion de téléservices selon la revendication 1, **caractérisé en ce que** ledit modèle de téléservice comprend des profils de terminaux, et **en ce que** des moyens sont prévus pour utiliser lesdits ensemble de règles et profils de terminaux pour proportionner des ressources de terminaux et de réseau d'une manière coordonnée.

4. Système de gestion de téléservices selon l'une quelconque des revendications précédentes, **caractérisé en ce que** ledit système de gestion de téléservices est adapté pour permettre à un utilisateur de prendre part à un processus de décision concernant l'établissement d'une proportionnalité pendant une phase de négociation pour établir un téléservice, et **en ce que**, une fois qu'un téléservice a été établi, ledit système de gestion de téléservices est adapté pour garantir toutes les ressources nécessaires pour maintenir une QoS nécessaire à l'utilisateur.

5. Système de gestion de téléservices selon la revendication 3, **caractérisé en ce que** ledit système de gestion de téléservices est adapté pour sélectionner une meilleure alternative de réalisation pour un téléservice en prenant en compte :

   l'ensemble de règles ;
   une compatibilité entre des terminaux ; et
   une situation actuelle de réseau ;

   de sorte que des ressources de réseau et de terminaux correspondent à une application de téléservice et à des besoins d'utilisateurs.

6. Système de gestion de téléservices selon l'une quelconque des revendications précédentes, **caractérisé en ce que** ledit système de gestion de téléservices est adapté pour fournir des paramètres de trafic de faible niveau à des moyens de contrôle d'admission d'appel et des moyens de contrôle de paramètres d'utilisation.

7. Système de gestion de téléservices selon l'une quelconque des revendications précédentes, **caractérisé en ce que** ledit système de gestion de téléservices comprend une application d'utilisateur ATM (mode de transfert asynchrone) native adaptée pour fournir une capacité d'établissement de proportionnalité d'application et une qualité garantie à des applications non ATM.

**8.** Système de gestion de téléservices selon l'une quelconque des revendications précédentes, **caractérisé en ce que** ledit système de gestion de téléservices est mis en oeuvre sous forme logicielle,

**9.** Système de gestion de téléservices selon la revendication 8, **caractérisé en ce que** ledit système de gestion de téléservices est mis en oeuvre entièrement dans un réseau de télécommunication.

**10.** Système de gestion de téléservices selon la revendication 8, **caractérisé en ce que** ledit système de gestion de téléservices est réparti entre un réseau de télécommunication et un équipement d'utilisateur unique.

**11.** Système de gestion de téléservices selon la revendication 8, **caractérisé en ce que** ledit système de gestion de téléservices est réparti entre un réseau de télécommunication et tous les équipements d'utilisateurs.

**12.** Système de gestion de téléservices selon la revendication 8, **caractérisé en ce que** ledit système de gestion de téléservices est réparti uniquement entre tous les équipements d'utilisateurs.

**13.** Système de gestion de téléservices selon l'une quelconque des revendications précédentes, **caractérisé en ce que** l'un de ladite pluralité de téléservices complexes est un service de cinéma à la demande.

**14.** Système de télécommunication, partagé logiquement entre une couche d'application, une couche de téléservice, une couche de service support et une couche de ressource, **caractérisé en ce que** ladite couche de téléservice comprend un système de gestion de téléservices selon l'une quelconque des revendications 1 à 13.

**15.** Procédé de gestion d'une pluralité de téléservices complexes fournissant à un utilisateur une interface graphique adaptée pour permettre à l'utilisateur de fournir des données concernant une QoS requise et d'autres paramètres, en relation avec un téléservice que l'utilisateur souhaite invoquer, mémorisant des informations concernant des définitions de services, et construisant un modèle de téléservice orienté objet à partir d'une demande de service, reçue de ladite interface graphique, en utilisant un mappage par défaut entre des entités de couche de téléservice et des entités de couche de service support, **caractérisé en ce que** ledit modèle de téléservice orienté objet décrit des composantes de service abstraites, comprenant des parties participant au service, des supports de communication et des relations, ainsi que des ressources de terminaux et des ressources de réseau à utiliser pour réaliser un téléservice demandé, et **en ce que** ledit modèle de téléservice comprend un ensemble de règles qui comprend :

des règles pour proportionner le téléservice ;
un ensemble minimum de composantes de service obligatoires; et
des autorisations des parties participant au service.

**16.** Procédé selon la revendication 15, **caractérisé en ce qu'**un dialogue est effectué entre un utilisateur et ledit module de contrôle de service, par l'intermédiaire de ladite interface graphique, et **en ce qu'**un langage orienté utilisateur est utilisé pour ledit dialogue duquel ledit système de gestion de téléservices peut déduire des données nécessaires pour établir et gérer un téléservice.

**17.** Procédé selon la revendication 15, **caractérisé en ce que** ledit modèle de téléservice comprend des profils de terminaux, et par l'utilisation desdits ensemble de règle et profils de terminaux pour proportionner des ressources de terminaux et de réseau d'une manière coordonnée.

**18.** Procédé selon l'une quelconque des revendications 15 à 17, **caractérisé en ce qu'**un utilisateur prend part à un processus de décision concernant l'établissement d'une proportionnalité pendant une phase de négociation pour établir un téléservice, et **en ce que** toutes les ressources nécessaires pour maintenir une QoS nécessaire à un utilisateur sont garanties, une fois qu'un téléservice a été établi,

**19.** Procédé selon la revendication 18, **caractérisé en ce qu'**une meilleure alternative de réalisation pour un téléservice est sélectionnée en prenant en compte:

l'ensemble de règles;
une compatibilité entre des terminaux ; et
une situation actuelle de réseau ;

de sorte que des ressources de réseau et de terminaux correspondent à une application de téléservice et à des besoins d'utilisateurs.

20. Procédé selon l'une quelconque des revendications 15 à 19, **caractérisé en ce que** des paramètres de trafic de faible niveau sont fournis à un contrôle d'admission d'appel et un contrôle de paramètres d'utilisation.

21. Procédé selon l'une quelconque des revendications 15 à 20, **caractérisé en ce qu'**une application d'utilisateur ATM native pour fournir une capacité d'établissement de proportionnalité d'application et une qualité garantie à des applications non ATM est prévue.

22. Procédé selon l'une quelconque des revendications 15 à 21, **caractérisé en ce que** ledit procédé est mis en oeuvre sous forme logicielle.

23. Procédé selon la revendication 22, **caractérisé en ce que** ledit logiciel est placé entièrement dans un réseau de télécommunication.

24. Procédé selon la revendication 22, **caractérisé en ce que** ledit logiciel est réparti entre un réseau de télécommunication et un équipement d'utilisateur unique,

25. Procédé selon la revendication 22, **caractérisé en ce que** ledit logiciel est réparti entre un réseau de télécommunication et tous les équipements d'utilisateurs.

26. Procédé selon la revendication 22, **caractérisé en ce que** ledit logiciel est réparti uniquement entre tous les équipements d'utilisateurs.

27. Procédé selon l'une quelconque des revendications 15 à 26, **caractérisé en ce que** l'un de ladite pluralité de téléservices complexes est un service de cinéma à la demande.

Figure 1

EP 1 108 334 B1

Figure 2

EMMA Terminal

SIGNE

**Service Control**

WWW Browser

TSP
Signalling

WWW Server

Network Access
Program

over
TCP/IP

SIGNE
Core

Local View of
Service
Instance

Service
Instance

Service
User

Application
Control

Teleservice
Drscription

Application
Launcher
Daemon

Terminal
Profiles

Registratior
Databaser

Data
ABB

IP/ATM
Protocol
Interface

Network Control

To other users

Video
ABB

Audio
ABB

Native ATM
Protocol
Interface

Application
Data

over ATM

User Application

Emma       Experimental Multimedia Middleware for ATM  SIGNE        Signalling Emulator
TSP  Telecommunication Service Protocol        IP        Internet Protocol
WWW        World Wide Web TCP Transmission control Protcol
ATM Asynchronus Transfer Mode  ABB  Application Building Block

# Figure3

Figure 4

EP 1 108 334 B1

Party Viewer

Party Movie Store

PE Movie

PE Browsing

Pe Demo

| PAE Video | PAE Audio | PAE Subtitle | PAE Browsing | PAE Preview | PAE Description |
|---|---|---|---|---|---|

PE Movie

PE Browsing

Pe Demo

| PAE Video | PAE Audio | PAE Subtitle | PAE Browsing | PAE Preview | PAE Description |
|---|---|---|---|---|---|

USM Movie

USM Demo

ASM Browsing

| ASM Video | ASM Audio | ASM Subtitle | ASM Preview | ASM Description | ASM Browsing |
|---|---|---|---|---|---|

| SM ACE | SM ACE | SM ACE | SM ACE | SM ACE | SM ACE | SM ACE |
|---|---|---|---|---|---|---|

| SM ACE | SM ACE | SM ACE | SM ACE | SM ACE | SM ACE | SM ACE |
|---|---|---|---|---|---|---|

Figure 5

η Background Source per node

N0  N2  N2  N8  N9

Viewer

Movie Store

Figure 6

EP 1 108 334 B1

Figure 7

EP 1 108 334 B1

Blocking Probability of the Foreground source

Figure 8

Blocking Probability of Background Sources

Figure 9

Average Over-provisioning [kbps]

Figure 10

PMF of Overprovisioning (n=100)

## Figure 11

Average Signalling Intensity

## Figure 12

Figure 13

EP 1 108 334 B1

NETWORK

TSMS

PC1

PC2

USER 1

USER 2

# Figure 14

NETWORK

TSMS

PC1

TSMS

PC2

TSMS

USER 1

USER 2

# Figure 15

Objects of the Telecommunications Service Description Model

| Party | Describes the role and permissions of the service user in the teleservice session (e.g member or chairman, in a conference) A party can be connected to different media, i.e. UserService Module |
|---|---|
| User Service Module | The basic component of a teleservice. It provides a grouping function combining one, or more, information types of a service into a complex media (e.g. Movie) understandable to a user |
| Party Edge | Defines the relationship between the party types that may take part in the service and the USM that comprises the service |
| Abstract Service Module | Represents the basic information types that may be used in a multimedia service and essentially encapsulates the attributes of the application layer of the service |
| Party ASM Edge | Describes the relationship between the ASMs and the Party Edge and maps a direction (send or receive) to the SMs. The User Quality Level is given in this object which means that each user can have an own quality mapping, and differnt ASM objects even related to the same USM can have different UQLs. |
| Service Module | Represents the protocols used to implement a basic information type of a multimedia service which is indicated in the ASM Protocols from the ATM Adaption Layer to the presentation layer ( e.g. AALS, TCP/IP, MPEG coding) are specified here. |
| Access Connection Element | Defines the characteristics of the bearer connection that is used to transport the data. It encompasses the user information protocols in the protocol stack of Physical Layer and the ATM Layer |

Table 1

## User Quality Levels

| Quality Factor | Picture size (pixels) | | Frame Rate (fps) | | Audio Channel | | Audio Sampling Rate (kHz) | |
|---|---|---|---|---|---|---|---|---|
| Level | Small | Large | Slow | Quick | mono | stereo | Low | High |
| Value | 192 x 144 | 384 x 288 | 10 | 25 | 1 | 2 | 24 | 48 |

### Table 2

Peak Cell Rate Requirement for Different Quality Settings
[x64 kbps]

| User Quality Levels for Video | User Quality levels for Audio | | | |
|---|---|---|---|---|
| | mono, low sampling rate | stereo, low sampling rate | mono, high sampling rate | stereo, high sampling rate |
| small size, simple frame rate | 25 | 26 | 28 | 32 |
| small size, double frame rate | 61 | 62 | 64 | 68 |
| large size, simple frame rate | 97 | 98 | 100 | 104 |
| large size, double frame rate | 241 | 242 | 244 | 248 |

### Table 3

Heuristic User Preference of Different Quality Settings

| Video | Audio | | | |
|---|---|---|---|---|
| | a1 | a2 | a3 | a4 |
| v1 | 4 | 2 | 2 | 1 |
| v2 | 3 | 4 | 2 | 2 |
| v3 | 3 | 3 | 6 | 4 |
| v4 | 2 | 3 | 5 | 8 |

### Table 4

**EP 1 108 334 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0774878 A
- SE 520571
- EP 1105800 A

**Non-patent literature cited in the description**

- **S. MINZER ; H. BUSSEY ; R. PORTER ; G. RATTA.** Evolutionary Trends in Call Control. *15th International Switching Symposium, ISS'95,* vol. 2, 300-304
- **S. BLAABJERG ; G. FODOR ; S. SZÉKELY.** Call Queueing: The design and performance analysis of a new ATM signalling functionality. *Broadband and Multimedia Workshop,* November 1996, 99-113
- **M.I. SMIRNOV.** Object-Oriented Framework for Scalable Multicast Call Modelling. *2nd International COST 237 Workshop,* November 1995, 19-39
- **A.A. LAZAR et al.** Control of resources in broadband networks with quality of service guarantees. *IEEE Communications Magazine,* October 1991
- **M. JONES.** Adaptive Real Time Resource Management Supporting Modular Composition of Digital Multimedia Services. *4th International Workshop on Network and Operating Systems Support for Digital Audio and Video,* November 1993
- **A. CAMPBELL ; G. COULSON ; D. HUTCHISON.** A quality of service architecture. *Computer Communications Review,* 1994, vol. 24 (1), 6-27
- **M. HERZBERG ; A. PITSILLIDES.** A Hierarchical Approach for the Bandwidth Allocation, Management, and Control in-BISDN. *Proc. of ICC'93,* 1993
- **H. CROSSMANN ; C. GRIWODZ ; G. GRASSEL ; M. PÜHLHÖFER ; M. SCHREIBER ; R. STEINMETZ ; H. WITTIG ; L. WOLF.** GLASS: A Distributed MHEG-Based Multimedia System. *2nd International COST 237 Workshop,* November 1995, 40-60
- **G.G. XIE ; S.S. LAM.** An efficient network architecture motivated by appliation-level QoS. *Journal of High Speed Networks,* 1997, vol. 6 (3), 165-179
- **C. PARRIS ; D. FERRARI.** The implementation of adynamic management scheme for guaranteed-performance connections. *Computer Communications,* 1998, vol. 21 (1), 1-23

- **D. REININGER ; M. OTT ; G. MICHELITSCH ; G. WELLING.** Dynamic Bandwidth Allocation for Distributed Multimedia with Adaptive QoS. *IEEE Real-Time Systems Symposium Workshop on Resource Allocation Problems in Multimedia Systems, Washington,* December 1996
- **Y.I. MANOLESSOS ; M.E. THEOLOGOU.** Dynamic application scaling as a means for QoS management. *Computer Communications,* 1997, vol. 20, 393-405
- **B. STRELEC.** Call Processing Negotiations of Networked Multi-party and Multimedia Sessions. *Broadband and Multimedia Workshop,* November 1996, 225-235
- **BJÖRKMAN et al.** The EMMA Multimedia Conference Service. *International Conference on Information Communications and Signal Processing,* September 1997, vol. 9-12, 1691-1695
- **SVRIVASTAVA et al.** Object Oriented Simulation of Multimedia on Demand over ATM Network. *IEEE Modeling, Analysis and Simulation of Computer and Telecommunication Systems*
- *MASCOTS '96, Proceedings of the Fourth International Workshop,* 01 February 1996, 128-132
- **C. PARRIS ; D. FERRARI.** The implementation of a dynamic management scheme for guaranteed-performance connections. *Computer Communications,* 1998, vol. 21 (1), 1-23
- **D. REININGER ; M. OTT ; G. MICHELITSCH ; G. WELLING.** Dynamic Bandwidth Allocation for Distributed Multimedia with Adaptive QoS. *IEEE Real-Time Systems Symposium Workshop on Resource Allocation Problems in Multimedia Systems,* December 1996
- **N. BJÖRKMAN ; I. CSELÉNYI ; A. LATOUR-HENNER ; G. ZÁRUBA.** The EMMA Multimedia Conference Service, first International Conference on Information. *Communications & Signal Processing,* September 1997

- **J.F. DE REZENDE ; A. MAUTHE ; D. HUTCHISON ; S. FDIDA ; J. WEINSTOCK.** M-Connection Service: A Multicast Service for Distributed Multimedia Applications. *2nd International COST 237 Workshop,* November 1995, 40-60
- **R. TEWARI.** An object-oriented approach to the management of distributed application systems. *Computer Networks and ISDN Systems,* 1997, vol. 29 (16), 1869-1879
- **I. CSELÉNYI ; S. MOLNÁR ; N. BJÖRKMAN.** Leaky Bucket Analysis as a Practical Traffic Characterisation Tool. *5th IFIP Workshop on Performance Modelling and -Evaluation of ATM Networks,* July 1997
- **A. ROMANOW ; S. FLOYD.** Dynamics of TCP Traffic over ATM Networks. *Computer Communications Review,* 1994, vol. 24 (4), 79-88
- **I. CSELÉNYI ; I. SZABO ; P. HARASZTI ; N. BJÖRKMAN ; C. GISGARD.** A Versatile Multimedia Platform. *15th IASTED International Conference on Applied Informatics,* February 1997, 276-279
- **P.H. CHU ; R.S. CHANG.** A community VoD system based on a dual bus architecture. *Computer Communications,* 1998, vol. 21 (1), 65-80
- **D. DELODDERE ; W. VERBIEST ; H. VERHILLE.** Interactive Video-On-Demand. *IEEE Communications Magazine,* May 1994, 82-88
- **T.D.C. LITTLE ; D. VENKATESH.** Prospects for interactive Video-On-Demand. *IEEE Multimedia,* 1994, 14-24
- **W.C. FENG.** Resource Allocation in Stored Video-On-Demand Systems. *IEEE Real-Time Systems Symposium Workshop on Resource Allocation Problems in Multimedia Systems,* December 1996
- **I. CSELÉNYI.** *Residential Multimedia, Marketing Research Report,* 1997
- **D. NIEHAUS et al.** Performance Benchmarking of Signalling in ATM Networks. *IEEE Communications Magazine,* August 1997, 134-143
- **W.C. WONG.** Packet reservation multiple access in a metropolitan microcellular radio environment. *IEEE J. Select. Areas Commun,* 1993, vol. 11 (6), 918-925
- **M.C. YUANG ; Y.R. HAUNG.** Bandwidth assignment paradigms for broadband integrated voice/data networks. *Computer Communications,* 1998, vol. 21 (3), 243-253
- **D. MEDHI ; S. GUPTAN.** Network Dimensioning and Performance of Multiservice, Multirate Loss Networks with Dynamic Routing. *IEEE/ACM Trans. on Networking,* December 1997, vol. 5 (6), 944-957
- **L. BARNETT.** The Space Division Multiple Access Protocol: asynchronous implementation and performance. *Computer Communications,* 1998, vol. 21 (3), 227-242